(19) Europäisches Patentamt
European Patent Office
Office européen des brevets

(11) EP 3 306 525 A2

(12) EUROPEAN PATENT APPLICATION

(43) Date of publication:
11.04.2018 Bulletin 2018/15

(51) Int Cl.:
G06K 9/00 (2006.01)

(21) Application number: 17188764.9

(22) Date of filing: 31.08.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 12.09.2016 JP 2016178028

(71) Applicant: Ricoh Company, Ltd.
Tokyo 143-8555 (JP)

(72) Inventor: MOTOHASHI, Naoki
Ohta-ku, Tokyo 143-8555 (JP)

(74) Representative: White, Duncan Rohan
Marks & Clerk LLP
Fletcher House (2nd Floor)
Heatley Road
The Oxford Science Park
Oxford OX4 4GE (GB)

(54) **IMAGE PROCESSING DEVICE, OBJECT RECOGNITION DEVICE, DEVICE CONTROL SYSTEM, IMAGE PROCESSING METHOD, AND CARRIER MEDIUM**

(57) In an image processing device (400, 5), a setting unit (403) determines, based on arbitrary two first coordinates in a vertical direction in a distance image for a subject, two second coordinates in a frequency image using a predetermined method, and sets a partial region on the frequency image sandwiched by the two second coordinates as a segment. The frequency image indicates frequency distribution of distance values by associating positions of the first coordinates in the distance image and distance values represented by the positions of the first coordinates. Each of the second coordinates represents a distance value intersecting with a first coordinate axis of the frequency image. A shape estimator (412) estimates a shape of a road surface, based on frequency points indicating frequencies of the distance values represented by the set segment.

FIG. 15

**Description**

BACKGROUND

Technical Field

The present invention relates to an image processing device, an object recognition device, a device control system, an image processing method, and a carrier medium.

Description of the Related Art

Conventionally, in safety of automobiles, body structures and the like of the automobiles have been developed from a viewpoint of how to protect a pedestrian and occupants when the pedestrian and an automobile collide with each other. However, in recent years, technologies to detect humans and automobiles at a high speed have been developed with progress of information processing technologies and image processing technologies. An automobile that automatically applies a brake before the automobile collides with an object to prevent the collision, using the technologies, has already been developed. In vehicle automatic control, a distance to an object such as a person or another vehicle needs to be accurately measured. Therefore, distance measurement by millimeter wave radar and laser radar, and distance measurement by a stereo camera have been put to practical use. For the practical use of such vehicle automatic control, objects on a screen need to be detected and controlled for each object based on information of distance measurement by the above-described device. For example, change of control is expected depending on whether the detected object is a pedestrian or a vehicle.

In a case of measuring a distance by a stereo camera, a disparity image is generated based on an amount of discrepancy (disparity) of a local region captured by right and left cameras, and the distance between a front object and the vehicle can be measured. Then, clustering processing for detecting a group of disparity pixels existing in nearly equal distances (disparity pixels including nearly equal disparity values) as one object is performed. However, if all the disparity pixels are clustered in a disparity image, there is a disadvantage that disparity pixels of a white line on a road surface or the like are also detected as the object, in addition to the object that is a detection target, and a part of the road surface supposed to be level is erroneously detected as the object. In this case, there is a disadvantage that an automatic control system decides that an object exists in front and hits the brakes, for example.

To solve this disadvantage, there is a method for generating a V-Disparity map (a vertical axis: vertical coordinates of a disparity image and a horizontal axis: disparity values) (hereinafter, may be simply referred to as "V map") (frequency image) in which each disparity pixel (one point on the disparity image) is projected on a horizontal coordinate (hereinafter, may be referred to as "dp coordinate") indicated by the disparity value of the disparity pixel with respect to a vertical position (a position of a y coordinate) of the disparity image, and estimating a road surface shape, using a statistical technique such as a least-squares method for a group of points (hereinafter, may be referred to as "disparity points") projected on the V map. Here, the V-Disparity map is a two-dimensional histogram illustrating frequency distribution of the disparity values, where the vertical axis is the y axis of the disparity image and the horizontal axis is the disparity values (or distances) of the disparity image, as described above. Further, "projecting" is processing for incrementing a value (pixel value) (an initial value = 0) of the disparity point of a predetermined coordinate on the V map by one. Then, clustering processing is performed with the disparity pixels of the disparity image, the disparity pixels corresponding to the disparity points existing at higher positions than an estimated road surface, thereby to reduce the disadvantage that an unnecessary disparity pixel detected from the road surface or the like is erroneously detected as an object.

As a technology to generate a V map and estimate a road surface in this way, a technology to determine sample points from a predetermined starting point to an end point of a V map, and estimate a road surface, using the least-squares method for a group of the sample points has been proposed (see JP 2011-128844 A). To be specific, a histogram about the frequency of disparity values on horizontal lines from a lower side to an upper side (from a near place to a distant place) of a disparity image, and the road surface shape is estimated using a statistical technique such as the least-squares method for the sample point group, where disparity with a maximum frequency is employed as the sample points.

In the real world, a road surface having various grades exists, and a position of a disparity point corresponding to the road surface projected on the V map is changed according to a grade. For the reason, in the road surface estimation, the position of the disparity point corresponding to the road surface needs to be accurately grasped on the V map and a correct road surface shape needs to be estimated. However, at the point of time of the road surface estimation, the grade of the road surface is unknown, and identification of what position on the V map the disparity point corresponding to the road surface is distributed is difficult. Typically, in road surface estimation processing, the V map is often divided into segments having a predetermined size, and the road surface estimation is performed for every segment. This is because a slope of the road surface is sometimes changed in the middle, and the processing with finer division enables robust road surface estimation for the change of the grade. However, as described above, what position on the V map the disparity point corresponding to the road surface is projected is unknown depending on a slope, and division into segments, favorably grasping a region where the road surface exists, is difficult. That is, to accurately estimate the road surface including various slopes, how to divide and arrange the segments to the position where the road surface exists is important. However, the technology described in JP 2011-128844 A has a disadvantage that the number of set segments is two and sufficient accuracy of the road surface estimation cannot be obtained for the road surface having a complicated shape.

SUMMARY

In one aspect of the present invention, an image processing device (400, 5) is provided, which includes a setting unit and a shape estimator.

The setting unit determines, based on arbitrary two first coordinates in a vertical direction in a distance image for a subject, two second coordinates in a frequency image using a predetermined method, and sets a partial region on the frequency image sandwiched by the two second coordinates as a segment. The frequency image indicates frequency distribution of distance values by associating positions of the first coordinates in the distance image and distance values represented by the positions of the first coordinates. Each of the second coordinates represents a distance value intersecting with a first coordinate axis of the frequency image. The shape estimator estimates a shape of a road surface, based on frequency points indicating frequencies of the distance values represented by the set segment.

In another aspect of the present invention, an object recognition device is provided, which includes: a first imaging unit to capture a subject to obtain a first captured image; a second imaging unit disposed in a position different from a position of the first imaging unit, and to capture the subject to obtain a second captured image; a first generator to generate the distance image based on the distance values obtained for the subject from the first captured image and the second captured image; and the image processing device as described above, further including a second generator to generate the frequency image based on the distance image.

In another aspect of the present invention, a device control system includes the above-described object recognition device and a control device to control a control target based on information of an object detected by the object recognition device.

In another aspect of the present invention, an image processing method, and carrier medium such as a recording medium that stores a control program, for controlling the above-described image processing device are provided.

Accordingly, accuracy of road surface estimation can be improved.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIGS. 1A and 1B are diagrams illustrating an example in which a device control system according to a first embodiment is mounted on a vehicle;

FIG. 2 is a diagram illustrating an example of an appearance of an object recognition device according to the first embodiment;

FIG. 3 is a diagram illustrating an example of a hardware configuration of the object recognition device according to the first embodiment;

FIG. 4 is a diagram for describing a principle for deriving a distance from an imaging unit to an object;

FIGS. 5A and 5B are explanatory diagrams of when obtaining a corresponding pixel in a comparative image, the corresponding pixel corresponding to a reference pixel in a reference image;

FIG. 6 is a diagram illustrating an example of a graph of a result of block matching processing;

FIG. 7 is a diagram illustrating an example of a functional block configuration of the object recognition device according to the first embodiment;

FIGS. 8A and 8B are diagrams illustrating an example of a V map generated from a disparity image;

FIGS. 9A and 9B are diagrams illustrating an example of a V map in a case of a level road surface;

FIGS. 10A and 10B are diagrams illustrating an example of a V map of a case where a vehicle reaches an uphill;

FIGS. 11A and 11B are diagrams illustrating an example of a V map of a case where a vehicle reaches a downhill;

FIGS. 12A and 12B are diagrams for describing an operation to set a segment using a reference road surface on a V map in the first embodiment;

FIGS. 13A and 13B are diagrams illustrating an example of a U map generated from a disparity image;

FIG. 14 is a diagram illustrating an example of a functional block configuration of a disparity value arithmetic processor of the object recognition device according to the first embodiment;

FIG. 15 is a diagram illustrating an example of a functional block configuration of a road surface estimator of the object recognition device according to the first embodiment;

FIG. 16 is a diagram for describing a V map generation operation;

FIG. 17 is a flowchart illustrating an example of an operation of block matching processing of a disparity value derivation unit according to the first embodiment;

FIG. 18 is a flowchart illustrating an example of an operation of road surface estimation processing of the road surface estimator according to the first embodiment;

FIGS. 19A and 19B are diagrams illustrating an example of a case where a reference road surface on a V map is unsuitable for setting a segment;

FIGS. 20A and 20B are diagrams for describing an operation to set a segment using a reference road surface having a fixed point on a V map as an intercept in a second embodiment;

FIGS. 21A and 21B are diagrams for describing an operation to set a segment using a road surface estimated with a focused frame in a third embodiment; and

FIG. 22 is a flowchart illustrating an example of an operation of road surface estimation processing of a road surface estimator according to the third embodiment.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

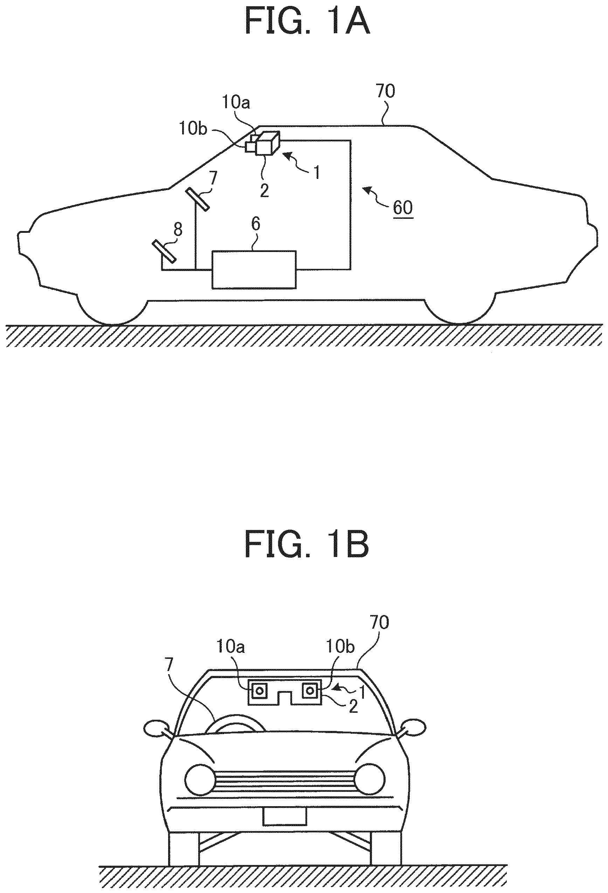

Hereinafter, embodiments of an image processing device, an object recognition device, a device control system, an image processing method, and a program according to the present invention will be described in detail with reference to FIGS. 1A and 1B to FIG. 22. The present invention is not limited by the embodiments below, and configuration elements in the embodiments below include elements easily conceived by a person skilled in the art, elements substantially the same, and elements within the scope of equivalents. Further, various omissions, replacements, changes, and combinations of the configuration elements can be made without departing from the gist of the embodiments below.

(Schematic Configuration of Vehicle Including Object Recognition Device)

FIGS. 1A and 1B are diagrams illustrating an example in which a device control system according to a first embodiment is mounted in a vehicle. A case in which a device control system 60 of the present embodiment is mounted in a vehicle 70 will be described as an example with reference to FIGS. 1A and 1B.

FIG. 1A is a side view of the vehicle 70 that mounts the device control system 60 and FIG. 1B is a front view of the vehicle 70.

As illustrated in FIGS. 1A and 1B, the vehicle 70 as an automobile mounts the device control system 60. The device control system 60 includes an object recognition device 1 installed in a vehicle interior as a living space of the vehicle 70, a vehicle control device 6, a steering wheel 7, and a brake pedal 8.

The object recognition device 1 has an imaging function to capture a traveling direction of the vehicle 70, and is installed near a rearview mirror inside a front window of the vehicle 70, for example. Although details of a configuration and an operation will be described below, the object recognition device 1 includes a main body 2, and an imaging unit 10a and an imaging unit 10b attached to the main body 2. The imaging units 10a and 10b are attached to the main body 2 to capture a subject in the traveling direction of the vehicle 70.

The vehicle control device 6 is an electronic control unit (ECU) that executes various types of vehicle control based on recognition information received from the object recognition device 1. The vehicle control device 6 executes, as examples of the vehicle control, steering control to control a steering system (control target) including the steering wheel 7 to avoid an obstacle on the basis of the recognition information received from the object recognition device 1, and brake control to control the brake pedal 8 (control target) to decelerate and stop the vehicle 70.

Execution of the vehicle control such as the steering control and the brake control improves safety of driving of the vehicle 70, like the device control system 60 including the object recognition device 1 and the vehicle control device 6.

As described above, the object recognition device 1 images the front of the vehicle 70. However, the embodiment is not limited to the example. That is, the object recognition device 1 may be installed to capture a rear or a side of the vehicle 70. In this case, the object recognition device 1 can detect positions of following vehicle and person behind the vehicle 70, or positions of another vehicle and person on a side of the vehicle 70. The vehicle control device 6 then detects a danger at the time of lane change or lane merge of the vehicle 70, and can execute the above-described vehicle control. Further, the vehicle control device 6 can execute the above-described vehicle control when vehicle control device 6 determines that there is the danger of collision on the basis of the recognition information about an obstacle behind the vehicle 70, which has been output from the object recognition device 1, in a reverse operation of the vehicle 70 such as at the time of parking.

(Configuration of Object Recognition Device)

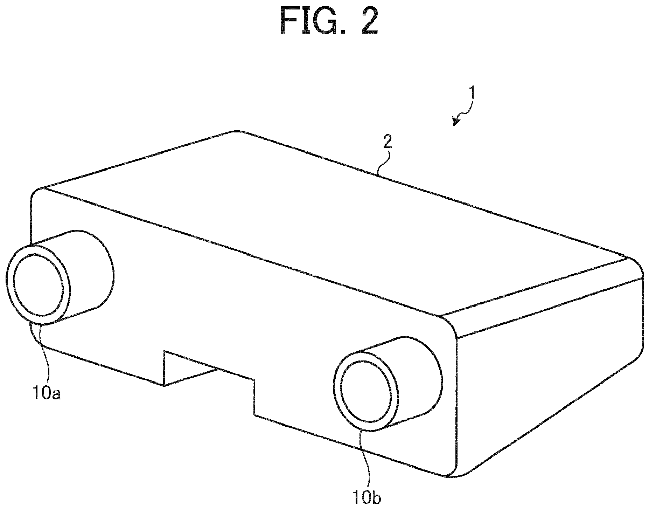

FIG. 2 is a diagram illustrating an example of an appearance of an object recognition device according to the first embodiment. As illustrated in FIG. 2, the object recognition device 1 includes the main body 2, and the imaging unit 10a and the imaging unit 10b attached to the main body 2, as described above. The imaging units 10a and 10b are a pair of cylindrical cameras arranged in parallel at equal positions with respect to the main body 2. For convenience of description, the imaging unit 10a illustrated in FIG. 2 may be referred to as right camera and the imaging unit 10b illustrated in FIG. 2 may be referred to as left camera.

<Hardware Configuration of Object Recognition Device>

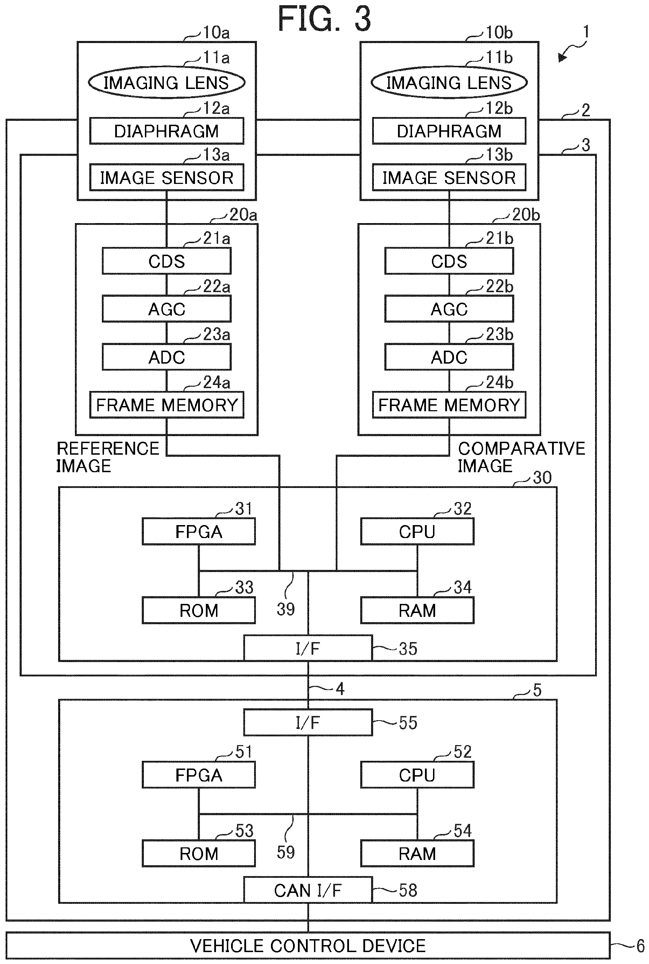

FIG. 3 is a diagram illustrating an example of a hardware configuration of the object recognition device according to the first embodiment. A hardware configuration of the object recognition device 1 will be described with reference to FIG. 3.

As illustrated in FIG. 3, the object recognition device 1 includes a disparity value derivation unit 3 and a recognition processor 5 in the main body 2.

The disparity value derivation unit 3 is a device that derives a disparity value dp (an example of a distance value) that indicates disparity with respect to an object, from a plurality of images obtained by capturing the object, and outputs a disparity image (an example of a distance image) that indicates the disparity value dp as a pixel value of each pixel. The recognition processor 5 is a device that performs object recognition processing and the like for the objects such as a person and a car on a captured image on the basis of the disparity image output from the disparity value derivation unit 3, and outputs recognition information that is information indicating a result of the object recognition processing to the vehicle control device 6.

As illustrated in FIG. 3, the disparity value derivation unit 3 includes the imaging unit 10a, the imaging unit 10b, a signal converter 20a, a signal converter 20b, and an image processor 30.

The imaging unit 10a is a processor that captures a subject in front and generates an analog image signal. The imaging unit 10a includes an imaging lens 11a, a diaphragm 12a, and an image sensor 13a.

The imaging lens 11a is an optical element for refracting incident light to focus an image of an object on the image sensor 13a. The diaphragm 12a is a member that blocks a part of the light having passed through the imaging lens 11a to adjust an amount of light entering the image sensor 13a. The image sensor 13a is a semiconductor element that converts the light having entered the imaging lens 11a and having passed through the diaphragm 12a into an electrical analog image signal. The image sensor 13a is implemented by, for example, a solid-state image sensor such as a charge coupled device (CCD) or a complementary metal oxide semiconductor (COMS).

The imaging unit 10b is a processor that captures a subject in front and generates an analog image signal. The imaging unit 10b includes an imaging lens 11b, a diaphragm 12b, and an image sensor 13b. Functions of the imaging lens 11b, the diaphragm 12b, and the image sensor 13b are similar to the above-described functions of the imaging lens 11a, the diaphragm 12a, and the image sensor 13a. The imaging lens 11a and the imaging lens 11b are installed in such a manner that principal planes of the respective lenses are on the same plane so that the right and left cameras can perform capturing under the same condition.

The signal converter 20a is a processor that converts the analog image signal generated by the imaging unit 10a into image data in a digital format. The signal converter 20a includes a correlated double sampling (CDS) 21a, an auto gain control (AGC) 22a, an analog digital converter (ADC) 23a, and a frame memory 24a.

The CDS 21a removes a noise from the analog image signal generated by the image sensor 13a by correlated double sampling, with a differential filter in a lateral direction or with a smoothing filter in a longitudinal direction. The AGC 22a performs gain control to control intensity of the analog image signal from which the noise has been removed by the CDS 21a. The ADC 23a converts the analog image signal for which the gain control has been performed by the AGC 22a into image data in a digital format. The frame memory 24a stores the image data converted by the ADC 23a.

The signal converter 20b is a processor that converts the analog image signal generated by the imaging unit 10b into image data in a digital format. The signal converter 20b includes a CDS 21b, an AGC 22b, an ADC 23b, and a frame memory 24b. Functions of the CDS 21b, the AGC 22b, the ADC 23b, and the frame memory 24b are similar to the above-described functions of the CDS 21a, the AGC 22a, the ADC 23a, and the frame memory 24a, respectively.

The image processor 30 is a device that performs image processing for the image data converted by the signal converter 20a and the signal converter 20b. The image processor 30 includes a field programmable gate array (FPGA) 31, a central processing unit (CPU) 32, a read only memory (ROM) 33, a random access memory (RAM) 34, an interface (I/F) 35, and a bus line 39.

The FPGA 31 is an integrated circuit, and performs processing for deriving the disparity value dp in the image based on the image data. The CPU 32 controls the functions of the disparity value derivation unit 3. The ROM 33 stores an image processing program, which is executed by the CPU 32 to control the functions of the disparity value derivation unit 3. The RAM 34 is used as a work area for the CPU 32. The I/F 35 is an interface for communicating with an I/F 55 in the recognition processor 5 through the communication line 4. The bus line 39 includes an address bus, a data bus, and the like that connect the FPGA 31, the CPU 32, the ROM 33, the RAM 34, and the I/F 35 in a communicative manner, as illustrated in FIG. 3.

The image processor 30 includes the FPGA 31 as an integrated circuit that derives the disparity value dp. However, the embodiment is not limited to the example, and may be another integrated circuit such as an application specific integrated circuit (ASIC).

As illustrated in FIG. 3, the recognition processor 5 includes an FPGA 51, a CPU 52, a ROM 53, a RAM 54, the I/F 55, a controller area network (CAN) I/F 58, and a bus line 59.

The FPGA 51 is an integrated circuit, and performs the object recognition processing for the object based on the disparity image received from the image processor 30. The CPU 52 controls the functions of the recognition processor 5. The ROM 53 stores an object recognition processing program, which is executed by the CPU 52 to execute the object recognition processing of the recognition processor 5. The RAM 54 is used as a work area of the CPU 52. The I/F 55 is an interface for communicating data with the I/F 35 of the image processor 30 through the communication line 4. The CAN I/F 58 is an interface for performing communication with an external controller (for example, the vehicle control device 6 illustrated in FIG. 3). The bus line 59 connected to a CAN of an automobile or the like includes an address bus, a data bus, and the like that connect the FPGA 51, the CPU 52, the ROM 53, the RAM 54, the I/F 55, and the CAN I/F 58 in a communicative manner, as illustrated in FIG. 3, for example.

The recognition processor 5 includes the FPGA 51 as an integrated circuit that performs the object recognition processing. However, the embodiment is not limited to the example, and may be another integrated circuit such as an ASIC.

With such a configuration, when the disparity image is transmitted from the I/F 35 of the image processor 30 to the recognition processor 5 through the communication line 4, the

FPGA 51 executes the object recognition processing for the objects such as a person and a car on the captured image on the basis of the disparity image according to a command of the CPU 52 in the recognition processor 5.

The above-described programs may be recorded on a computer-readable recording medium in an installable or executable format file and distributed. The recording medium is a compact disc read only memory (CD-ROM), a secure digital (SD) memory card, or the like.

Further, as illustrated in FIG. 3, the image processor 30 of the disparity value derivation unit 3 and the recognition processor 5 are described as separate devices. However, the embodiment is not limited to the example, and for example, the image processor 30 and the recognition processor 5 may be the same device, and the device performs generation of the disparity image and the object recognition processing. Further, the hardware configuration of the object recognition device 1 illustrated in FIG. 3 is an example and is not limited to the example, and may be realized by a hardware circuit that realizes similar functions to the above-described functions.

<Principle of Distance Measurement>

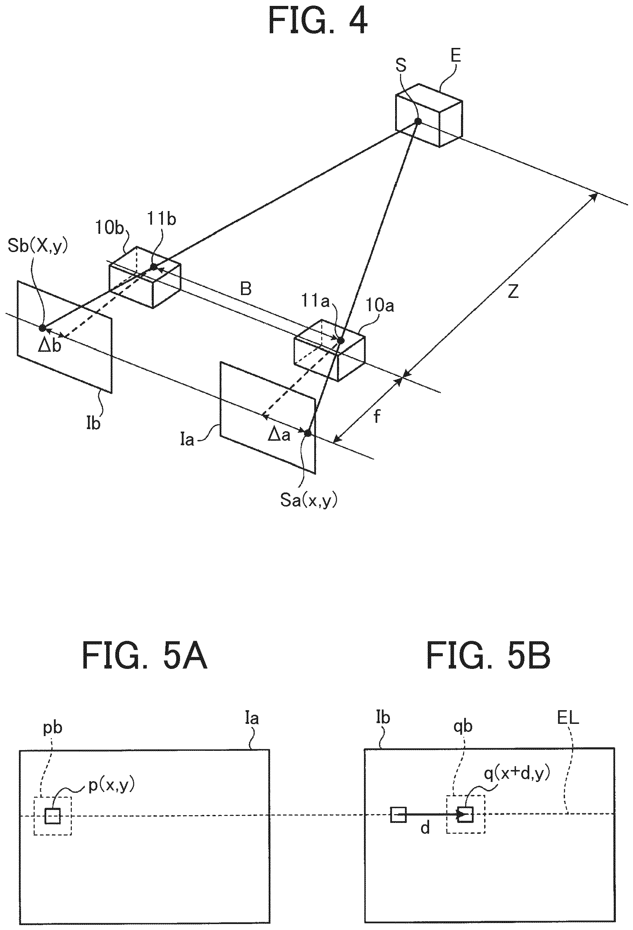

FIG. 4 is a diagram for describing a principle for deriving a distance from an imaging unit to an object. A principle for deriving disparity from a stereo camera to an object by stereo matching processing and measuring a distance from the stereo camera to the object according to a disparity value indicating the disparity will be described with reference to FIG. 4.

An imaging system illustrated in FIG. 4 includes the imaging unit 10a and the imaging unit 10b arranged in parallel at equal positions. The imaging units 10a and 10b respectively include the imaging lenses 11a and 11b that refract incident light to focus an image of an object to an image sensor as a solid-state image sensor. The images captured by the imaging unit 10a and the imaging unit 10b are a reference image Ia and a comparative image Ib, respectively. A point S on an object E in a three-dimensional space is mapped at positions on a straight line in the reference image Ia and in the comparative image Ib, the straight line being parallel to a straight line that connects the imaging lens 11a and the imaging lens 11b, in FIG. 4. Here, the points S mapped on the images are a point Sa(x, y) on the reference image Ia and a point Sb(X, y) on the comparative image Ib. At this time, the disparity value dp is expressed by the formula (1) below, using the point Sa(x, y) in coordinates on the reference image Ia and the point Sb(X, y) in coordinates on the comparative image Ib.

$$dp = X - x \quad ... \quad \text{(Formula 1)}$$

Further, in FIG. 4, the disparity value dp can also be expressed by $dp = \Delta a + \Delta b$, where a distance between the point Sa(x, y) on the reference image Ia and an intersection of a perpendicular line on an imaging surface from the imaging lens 11a is $\Delta a$, and a distance between the point Sb(X, y) on the comparative image Ib and an intersection of a perpendicular line on an imaging surface from the imaging lens 11b is $\Delta b$.

Next, a distance Z between the imaging unit 10a or 10b and the object E is derived using the disparity value dp. Here, the distance Z is a distance from a straight line connecting a focal position of the imaging lens 11a and a focal position of the imaging lens 11b to the point S on the object E. As illustrated in FIG. 4, the distance Z can be calculated by the (formula 2) below, using a focal length f of the imaging lens 11a and the imaging lens 11b, a base length B that is a length between the imaging lens 11a and the imaging lens 11b, and the disparity value dp.

$$Z = (B \times f)/dp \quad ... \quad \text{(Formula 2)}$$

According to the (formula 2), it is found that the distance Z becomes smaller as the disparity value dp is larger, and the distance Z becomes larger as the disparity value dp is smaller.

<Block Matching Processing>

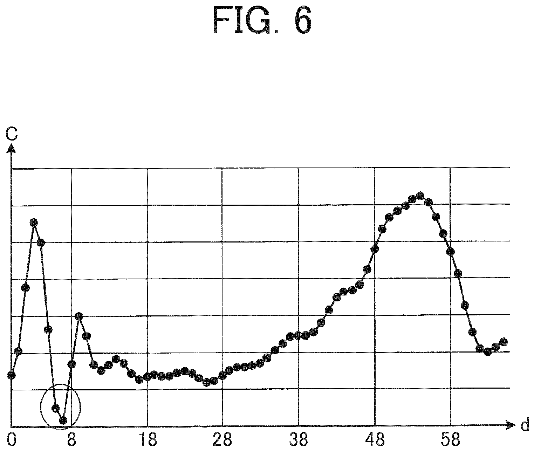

FIGS. 5A and 5B are explanatory diagrams of when obtaining a corresponding pixel in a comparative image, the corresponding pixel corresponding to a reference pixel in a reference image. FIG. 6 is a diagram illustrating an example of a graph of a result of block matching processing. A distance measuring method by block matching processing will be described with reference to FIGS. 5A and 5B and FIG. 6.

A method for calculating a cost value C(p, d) will be described with reference to FIGS. 5A and 5B and FIG. 6. Hereinafter, description will be given where C(p, d) represents C(x, y, d).

In FIGS. 5A and 5B, FIG. 5A is a conceptual diagram illustrating a reference pixel p and a reference region pb in the reference image Ia, and FIG. 5B is a conceptual diagram of when calculating the cost value C while sequentially shifting (moving) a candidate of a corresponding pixel in the comparative image Ib, the corresponding pixel corresponding to the reference pixel p illustrated in FIG. 5A. Here, the corresponding pixel indicates a pixel in the comparative image Ib, the pixel being most similar to the reference pixel p in the reference image Ia. Further, the cost value C is an evaluation value (the degree of coincidence) indicating similarity or non-similarity of each pixel in the comparative image Ib with respect to the reference pixel p in the reference image Ia. The cost value C below will be described as an evaluation value indicating non-similarity indicating that a pixel in the comparative image Ib is more similar to the reference pixel p as the value becomes smaller.

As illustrated in FIG. 5A, the cost value C(p, d) of a candidate pixel q(x + d, y) that is a candidate of the corresponding pixel corresponding to the reference pixel p(x, y) is calculated on the basis of the reference pixel p(x, y) in the reference image Ia and luminance values (pixel values) of the candidate pixel q(x + d, y) that is the candidate of the corresponding pixel on an epipolar line EL in the comparative image Ib with respect to the reference pixel p(x, y). d is a shift amount (amount of discrepancy) between the reference pixel p and the candidate pixel q, and the shift amount d is shifted in units of a pixel. That is, the cost value C(p, d) as the non-similarity of the luminance value between the candidate pixel q(x + d, y) and the reference pixel p(x, y) is calculated while the candidate pixel q(x + d, y) is sequentially shifted by one pixel in a range specified in advance (for example, $0 < d < 25$). Further, the block matching processing is performed in the present embodiment as stereo matching processing for obtaining the corresponding pixel of the reference pixel p. In the block matching processing, the non-similarity between the reference region pb that is a predetermined region around the reference pixel p of the reference image Ia, and a candidate region qb (the size is the same as the reference region pb) around the candidate pixel q of the comparative image Ib. As the cost value C indicating the non-similarity between the reference region pb and the candidate region qb, a sum of absolute difference (SAD), a sum of squared difference (SSD), or a zero-mean-sum of squared difference (ZSSD) obtained by subtracting an average value of blocks from a value of a SSD is used. The evaluation value indicates the non-similarity, because the value becomes smaller as the correlation is higher (the degree of similarity is higher).

As described above, since the imaging units 10a and 10b are arranged in parallel at equal positions, the reference image Ia and the comparative image Ib are also in a parallel and equal position relationship. Therefore, the corresponding pixel in the comparative image Ib, the corresponding pixel corresponding to the reference pixel p in the reference image Ia, exists on the epipolar line EL illustrated as a line in a lateral direction in view of the sheet surface in FIGS. 5A and 5B. To obtain the corresponding pixel in the comparative image Ib, the pixel on the epipolar line EL in the comparative image Ib is simply obtained.

The cost value C(p, d) calculated in the block matching processing is expressed by the graph illustrated in FIG. 6, in the relationship with the shift amount d. In the example of FIG. 6, the cost value C becomes the minimum value when the shift amount d = 7 and thus is derived as the disparity value dp = 7.

<Configurations and Operations of Function Blocks of Object Recognition Device>

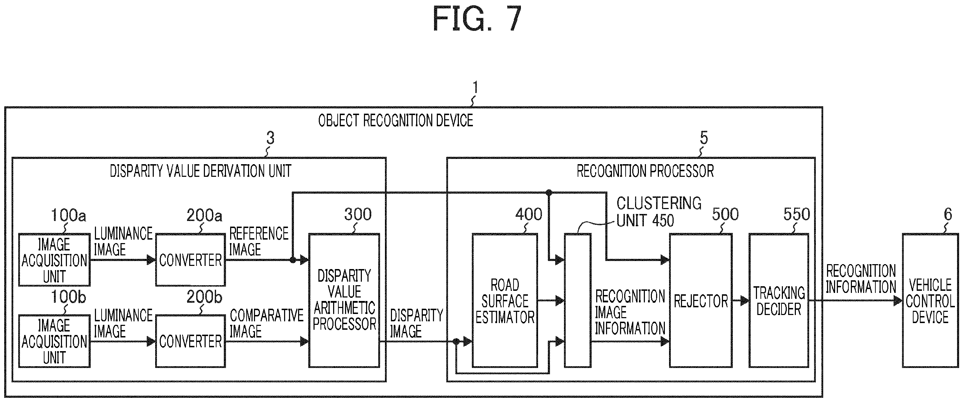

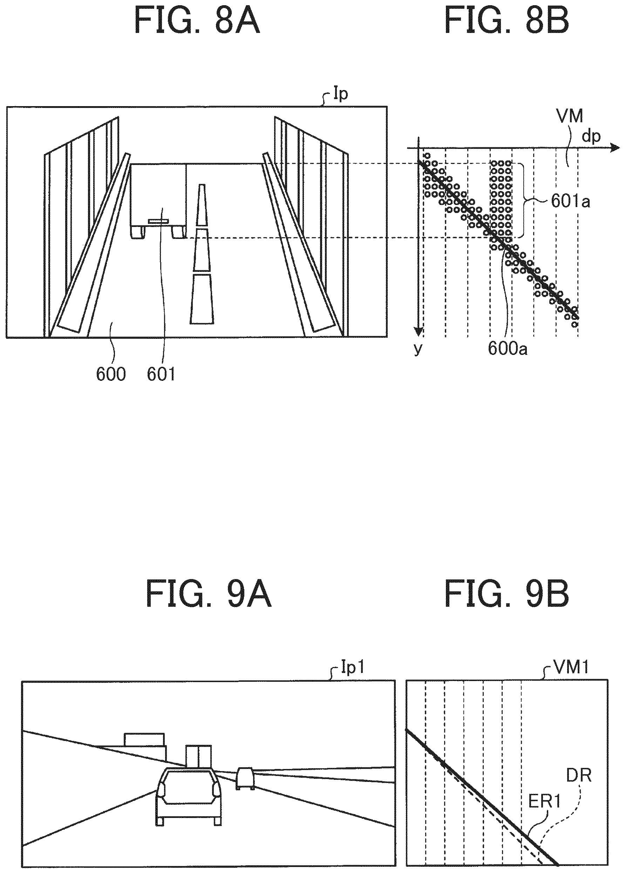

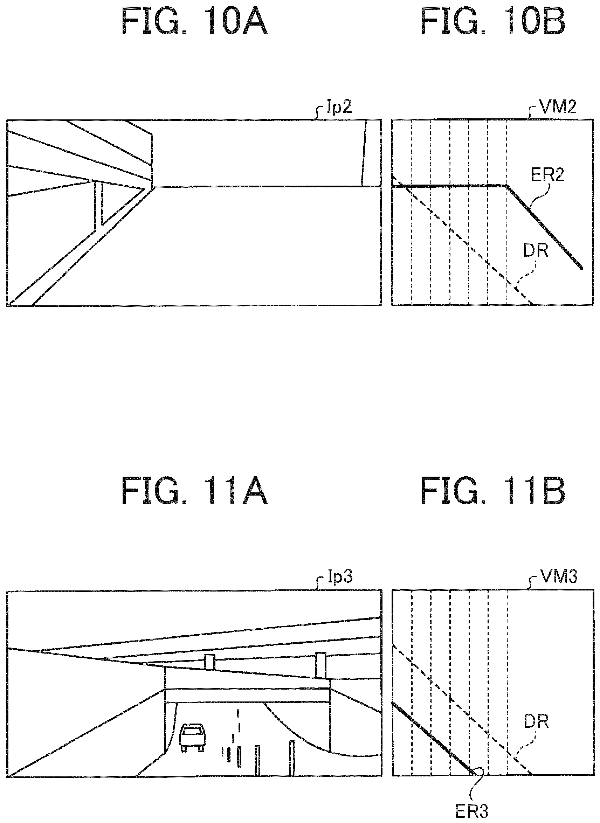

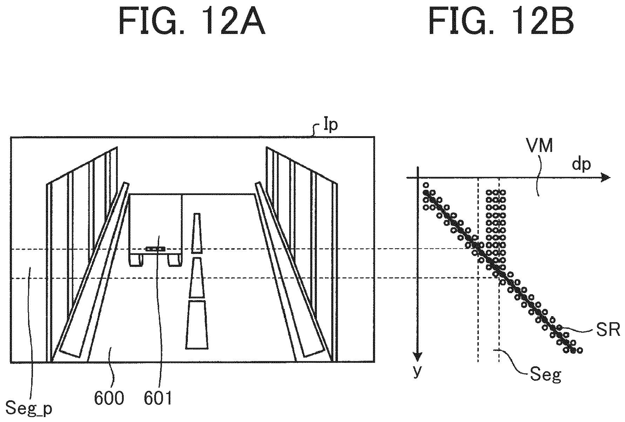

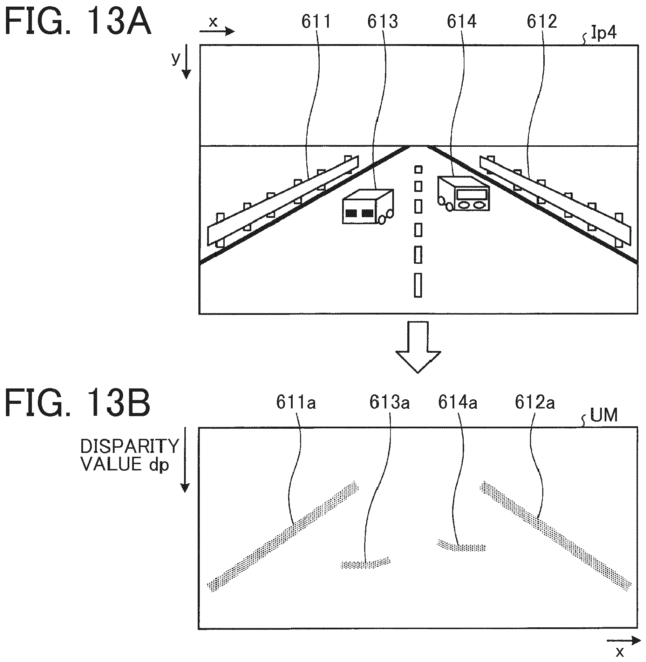

FIG. 7 is a diagram illustrating an example of a functional block configuration of the object recognition device according to the first embodiment. FIGS. 8A and 8B are diagrams illustrating an example of a V map generated from a disparity image. FIGS. 9A and 9B are diagrams illustrating an example of a V map in a case of a level road surface. FIGS. 10A and 10B are diagrams illustrating an example of a V map of a case where a vehicle reaches an uphill. FIGS. 11A and 11B are diagrams illustrating an example of a V map of a case where a vehicle reaches a downhill. FIGS. 12A and 12B are diagrams for describing an operation to set a segment using a reference road surface on a V map in the first embodiment. FIGS. 13A and 13B are diagrams illustrating an example of a U map generated from a disparity image. Configurations and operations of functional blocks of a principal portion of the object recognition device 1 will be described with reference to FIG. 7 to FIGS. 13A and 13B.

As described in FIG. 3, the object recognition device 1 includes the disparity value derivation unit 3 and the recognition processor 5, as illustrated in FIG. 7. The disparity value derivation unit 3 includes an image acquisition unit 100a (first imaging unit), an image acquisition unit 100b (second imaging unit), converters 200a and 200b, and a disparity value arithmetic processor 300.

The image acquisition unit 100a is a functional unit that captures a subject in front by the right camera, generates an analog image signal, and obtains a luminance image that is an image based on the image signal. The image acquisition unit 100a is implemented by the imaging unit 10a illustrated in FIG. 3.

The image acquisition unit 100b is a functional unit that captures the subject in front by the left camera, generates an analog image signal, and obtains a luminance image that is an image based on the image signal. The image acquisition unit 100b is implemented by the imaging unit 10b illustrated in FIG. 3.

The converter 200a is a functional unit that removes a noise from image data of the luminance image obtained by the image acquisition unit 100a, converts the image data into image data in a digital format, and outputs the image data. The converter 200a is implemented by the signal converter 20a illustrated in FIG. 3.

The converter 200b is a functional unit that removes a noise from image data of the luminance image obtained by the image acquisition unit 100b, converts the image data into image data in a digital format, and outputs the image data. The converter 200b is implemented by the signal converter 20b illustrated in FIG. 3.

Here, between the image data of the two luminance images output by the converters 200a and 200b (hereinafter, simply referred to as luminance images), the luminance image captured by the image acquisition unit 100a as the right camera (imaging unit 10a) is the image data of the reference image Ia (hereinafter, simply referred to as reference image Ia) (first captured image), and the luminance image captured by the image acquisition unit 100b as the left camera (imaging unit 10b) is the image data of the comparative image Ib (hereinafter, simply referred to as comparative image Ib) (second captured image). That is, the converters 200a and 200b respectively output the reference image Ia and the comparative image Ib on the basis of the two luminance images respectively output from the image acquisition units 100a and 100b.

The disparity value arithmetic processor 300 is a functional unit that derives disparity values of pixels of the reference image Ia on the basis of the reference image Ia and the comparative image Ib respectively received from the converters 200a and 200b, and generates a disparity image in which the disparity values correspond to the pixels of the reference image Ia. The disparity value arithmetic processor 300 outputs the generated disparity image to the recognition processor 5.

As illustrated in FIG. 7, the recognition processor 5 includes a road surface estimator 400, a clustering unit 450, a rejector 500, and a tracking decider 550.

The road surface estimator 400 is a functional unit that projects the pixel values (disparity values) of the disparity image received from the disparity value arithmetic processor 300 to disparity points of corresponding coordinates on the V map to generate a final V map, selects sample points from the disparity points projected on the V map, and performs linear approximation (or curve approximation) for a group of the selected sample points to estimate the road surface shape. Here, FIG. 8A illustrates the disparity image Ip output from the disparity value arithmetic processor 300, and FIG.

8B illustrates a V map VM generated from the disparity image Ip by the road surface estimator 400. As illustrated in FIG. 8B, the vertical axis of the V map VM corresponds to y coordinates in the disparity image Ip, and the horizontal axis correspond to the disparity values dp. At the time of generation of the V map VM, the disparity value existing on a horizontal line in the disparity image Ip, on a predetermined y coordinate, is projected on a dp coordinate on the V map VM, and thus the frequency of the disparity value is stored in the pixel value of each coordinate on the V map VM.

In the disparity image Ip illustrated in FIG. 8A, a road surface 600 and a car 601 are photographed, for example. The road surface 600 in the disparity image Ip corresponds to an estimated road surface 600a and the car 601 corresponds to a car portion 601a on the V map VM. The estimated road surface 600a is a road surface shape estimated from the disparity points corresponding to the road surface 600, on the V map VM, as described below.

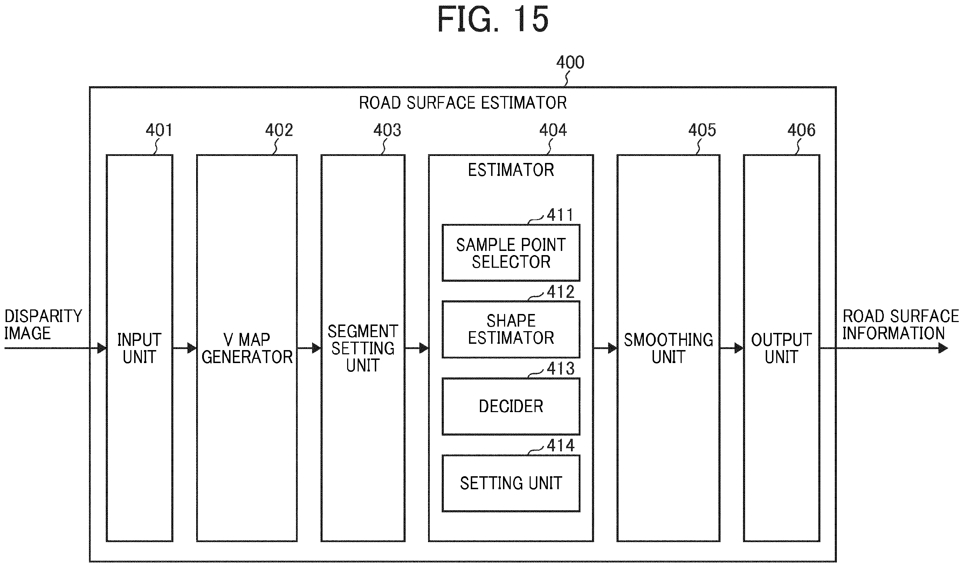

Further, the road surface estimator 400 performs linear approximation for positions estimated as the road surface from the generated V map VM. To be specific, the road surface estimator 400 selects sample points that are representative points necessary for estimation of the road surface shape from the disparity points projected on the V map VM, estimates the road surface shape by performing linear approximation for the sample points by the least-squares method or the like, and obtains the estimated road surface 600a. In a case where the road surface is level, the approximation can be performed with one straight line. However, in a case of a road surface with changed grade, the section of the V map VM needs to be divided and the linear approximation is performed with accuracy. Further, the disparity value becomes larger as the road surface is nearer to the vehicle 70, and thus the disparity value in a lower portion of the disparity image has a larger value than the disparity value in an upper portion. Therefore, the estimated road surface 600a on the V map VM has a shape downward to the right (upward to the left), as illustrated in FIG. 8B. At this time, the disparity indicating the object is projected in the range of the y coordinates where the object exists (the range of the horizontal broken lines illustrated in FIGS. 8A and 8B). Since the object exists at positions higher than the road surface, the distribution on the V map VM has the shape extending in an up and down direction. This is because the distance from the object recognition device 1 is nearly constant in the same object, and thus the disparity values obtained for the object are close numerical values to one other. Detailed configuration and operation of the road surface estimator 400 will be described in FIGS. 15, 16, and 18.

On the V map VM, the car portion 601a, which is a cluster positioned above the estimated road surface 600a, corresponds to the car 601 as an object on the actual road surface (road surface 600). When a U-Disparity map is generated by the clustering unit 450 described below, only information of above the estimated road surface is used for removal of noise.

Next, types of the estimated road surface will be described. That is, how specifically the disparity values of a road surface including various grades are distributed on the V map will be described. First, FIG. 9A illustrates a disparity image Ip1 of a case where a vehicle travels on a level road surface, and FIG. 9B illustrates a V map VM1 generated from the disparity image Ip1. As illustrated in the V map VM1 in FIG. 9B, when a vehicle travels on the level road surface, an estimated road surface ER1 nearly accords with a default road surface DR that is a road surface assumed to be a level road surface (hereinafter, referred to as "default road surface").

Next, FIG. 10A illustrates a disparity image Ip2 of a case where the vehicle reaches an uphill, and FIG. 10B illustrates a V map VM2 generated from the disparity image Ip2. As illustrated in the V map VM2 in FIG. 10B, an estimated road surface ER2, which is an estimated uphill road surface, exists above the default road surface DR, and a starting position of the estimated road surface ER2 also exists on the right of the default road surface DR. When the vehicle drives on the uphill, the vehicle becomes parallel to the uphill road surface, and thus the disparity of the road surface becomes similar to the case where the vehicle travels on the level road surface

Next, FIG. 11A illustrates a disparity image Ip3 of a case where a vehicle reaches a downhill, and FIG. 11B illustrates a V map VM3 generated from the disparity image Ip3. As illustrated in the V map VM3 in FIG. 11B, an estimated road surface ER3, which is an estimated downhill road surface, exists below the default road surface DR, and a starting position of the estimated road surface ER3 exists on the left of the default road surface DR. When the vehicle drives on the downhill, the vehicle becomes parallel to the downhill road surface, and thus the disparity of the road surface becomes similar to the case where the vehicle travels on the level road surface.

As described above, typical types of the estimated road surface have been described. At the point of time of the road surface estimation, the grade of the road surface is unknown, and identification of what position on the V map the disparity point corresponding to the road surface is distributed is difficult. FIG. 8B illustrates an example in which the V map VM is simply and equally divided into seven segments (strip-shaped partial regions), and the road surface can be appropriately estimated. However, typically, a segment may be set to a position where the disparity point corresponding to the road surface is not projected. Further, if larger segments are set to a region where the road surface shape is intended to be finely estimated, processing may be coarse estimation.

Therefore, the road surface estimator 400 of the recognition processor 5 of the present embodiment sets the position of the segment in accordance with the disparity point corresponding to the road surface, using a history road surface or the default road surface as the reference road surface. To be specific, when the road surface estimator 400 sets a segment on the V map VM illustrated in FIG. 12B, the segment corresponding to the disparity image Ip illustrated in FIG. 12A, for example, in accordance with the disparity point corresponding to the road surface, the road surface estimator 400 first selects two predetermined y coordinates (first coordinates) of the disparity image Ip. Here, as illustrated in FIG. 12A, a partial region sandwiched by the selected two y coordinates on the disparity image Ip is segment Seg_p. Next, the road surface estimator 400 determines two dp coordinates (second coordinates) respectively including the two y coordinates in a reference road surface SR on the V map VM. That is, since the reference road surface SR is a straight line, and thus if the y coordinates are identified, an inclination and an intercept of the linear reference road surface SR are known. Therefore, the dp coordinates are uniquely determined. Here, as illustrated in FIG. 12B, a partial region sandwiched by the determined two dp coordinates on the V map VM is segment Seg. That is, a y coordinate in the disparity image Ip can be converted into a dp coordinate on the V map VM, using the reference road surface SR.

The history road surface used as the reference road surface SR is a past estimated road surface, which has been estimated prior to one or more frame (may be an average road surface of road surfaces estimated in a predetermined number of past frames) and is a road surface based on disparity points on which disparity values corresponding to the road surface have been projected in the past. Further, the default road surface used as the reference road surface SR is a road surface based on disparity points on which disparity values corresponding to the road surface have been projected in many circumstances. Therefore, as described above, by using the history road surface or the default road surface as the reference road surface SR, and setting the segment Seg, using the reference road surface SR, the position of the disparity point on which the disparity value corresponding to the road surface is expected to be projected can be predicted to a certain extent. There is a case in which the position of the disparity point on which the disparity value corresponding to the road surface is projected is substantially changed due to pitching of the vehicle 70 between frames. In that case, there is a higher possibility of enabling setting of the segment with high accuracy than a case where the V map VM is reasonably divided, although discrepancy occurs.

Further, a width of the segment Seg on the V map VM in a dp direction, the segment Seg corresponding to the segment Seg_p in the disparity image Ip can also be dynamically changed in accordance with the inclination of the reference road surface SR. For example, when the inclination of the reference road surface SR is a steep grade, an interval between dp coordinates of both ends of the segment Seg becomes small. Therefore, setting of the segment using the reference road surface SR can also appropriately enable setting of the width of the segment Seg in the dp direction in accordance with the grade of the reference road surface SR, in addition to the estimation of the position of the disparity point on which the disparity value corresponding to the road surface is projected. An advantage of dynamic change of the width of the segment in accordance with the grade of the reference road surface SR will be described. For example, in a case of the road surface with a steep grade, the amount of information of the disparity of the road surface included on the V map is decreased. For example, when distribution of the default road surface and distribution of the road surface with a steep grade from the same starting point on the V map are compared, the latter road surface goes through an upper end (or a lower end) of the V map in an earlier time than the former default road surface. On the other hand, in a case where the grade becomes gentle, the amount of information of the disparity of the road surface on the V map is increased. As described above, in a case of the steep grade, it is better to make the width of the segment narrow and set and limit the segment to a portion of the disparity point of the road surface on the V map. On the other hand, in a case of the road surface with a gentle grade, it is better to make the width of the segment wide.

Further, in the setting of the segment using reference road surface SR, the segment Seg on the V map VM is determined in accordance with the segment Seg_p in the disparity image Ip. Therefore, for example, when setting the segment Seg to be narrow and performing the road surface estimation, the width of the segment Seg in the dp direction can be made small by setting the size of the segment Seg_p to be small, because the optical resolution is low in a distant region. That is, the size of the segment Seg can be intuitively determined while seeing the disparity image Ip.

The road surface continues from a lower side to an upper side of the disparity image Ip, and thus it is desirable to set the segments in the V map VM in a continuous manner. However, the embodiment is not limited to the example, and the segments may be purposely discontinuous. For example, in a case where a segment of a certain y coordinate is known to include many noises in the disparity image Ip, two y coordinates may be selected to avoid the region. In this case, a predetermined section is removed in the segment Seg of the corresponding V map VM, and the road surface estimation is not performed. At this time, in the road surface estimation, the road surface of the non-estimated section may be interpolated by extending the estimated road surface of a nearer segment. Note that the estimation is more likely to fail in this section, and thus the clustering processing may not be performed for the object existing in that section without estimating the road surface.

In a case where pitching occurs by receiving a state of the vehicle 70 from the CAN or the like, identification of the disparity value of the position corresponding to the road surface becomes difficult, and thus a fixed segment may be set.

An example in which the history road surface or the default road surface is used as the reference road surface SR has been described. However, an arbitrary road surface can be used as long as the road surface can be defined on another V map VM. For example, a road surface obtained by extending a road surface, which has been estimated in a near segment, up to the last segment may be used as the reference road surface, in consideration of the characteristic that the accuracy of a distant disparity value becomes poorer.

The clustering unit 450 is a functional unit that detects an object in the disparity image on the basis of the reference image Ia (luminance image) and the disparity image received from the disparity value derivation unit 3, and the V map and the estimated road surface output by the road surface estimator 400. To be specific, the clustering unit 450 first generates a U map UM that is a U-Disparity map (hereinafter, may be simply referred to as "U map") illustrated in FIG. 13B in order to recognize an object, using only information positioned above the estimated road surface estimated by the road surface estimator 400, on the V map, that is, for example, using information corresponding to a left guardrail 611, a right guardrail 612, a car 613, and a car 614 in a disparity image Ip4 illustrated in FIG. 13A. Here, the U-Disparity map is a two-dimensional histogram illustrating frequency distribution of the disparity values dp, where the horizontal axis is an x axis of the disparity image Ip and the vertical axis is the disparity values dp (or distances) of the disparity image Ip. The left guardrail 611 in a disparity image Ip4 illustrated in FIG. 13A corresponds to a left guardrail portion 611a on the U map UM, the right guardrail 612 corresponds to a right guardrail portion 612a, the car 613 corresponds to a car portion 613a, and the car 614 corresponds to a car portion 614a.

The clustering unit 450 may generate a Real U-Disparity map form the disparity image Ip4. Here, the Real U-Disparity map is a two-dimensional histogram in which the horizontal axis is an actual distance in a direction from the imaging unit 10b (right camera) to the imaging unit 10a (left camera), and the vertical axis is the disparity values dp of a disparity image (or distances in a depth direction converted from the disparity values dp).

Further, the image input from the disparity value derivation unit 3 to the clustering unit 450 is not limited to the reference image Ia and may be the comparative image Ib.

The clustering unit 450 can identify positions and widths (xmin, xmax) of an object in the x-axis direction in the disparity image and in the reference image Ia from the generated U map. Further, the clustering unit 450 can identify an actual depth of the object from information (dmin, dmax) of a height of the object on the generated U map. Further, the clustering unit 450 can identify positions and heights of the object in the y-axis direction in the disparity image and the reference image Ia (ymin = "a y coordinate corresponding to a maximum height from the road surface having a maximum disparity value", and ymax = "a y coordinate indicating a height of the road surface obtained from a maximum disparity value") from the received V map. Further, the clustering unit 450 can identify actual sizes of the object in the x-axis direction and the y-axis direction from the widths (xmin, xmax) of the object in the x-axis direction and heights (ymin, ymax) of the object in the y-axis direction, which are identified in the disparity image, and the disparity values dp respectively corresponding to the widths and the heights. As described above, the clustering unit 450 can identify the position of the object in the reference image Ia and the actual width, height, and depth, using the V map and the U map. Further, the position of the object in the reference image Ia is identified and thus the position in the disparity image is determined. Therefore, the clustering unit 450 can also determine the distance to the object.

Further, the clustering unit 450 can identify what the object is, using the (table 1) below, from the actual sizes (width, height, and depth) identified about the object. For example, in a case where the width of the object is 1300 , the height is 1800 , and the depth is 2000 , the object can be identified as a "standard-sized car". The information in which the width, the height, and the depth are associated with types of objects (object types), like the (table 1), may be stored in the RAM 54 or the like as a table.

[TABLE 1]

| OBJECT TYPE | WIDTH | HEIGHT | DEPTH | UNIT (mm) |
|---|---|---|---|---|
| MOTORCYCLE OR BICYCLE | < 1100 | < 2500 | > 1000 | |
| PEDESTRIAN | < 1100 | < 2500 | < = 1000 | |
| SMALL-SIZED CAR | < 1700 | < 1700 | < 10000 | |
| STANDARD-SIZED CAR | < 1700 | < 2500 | < 10000 | |
| MOTOR TRUCK | < 3500 | < 3500 | < 15000 | |
| OTHERS | SIZES NOT FALLING WITHIN ABOVE SIZES | | | |

The clustering unit 450 then outputs information regarding an image (recognition image) of the identified object (for example, the information includes coordinates indicating the position in the reference image Ia, the sizes, and the like) (hereinafter, the information is simply referred to as "recognition image information").

The rejector 500 is a functional unit that performs rejection decision for deciding whether the recognition image indicated by the recognition image information is rejected, based on the reference image Ia output from the disparity value derivation unit 3 and the recognition image information output from the clustering unit 450. Here, the rejection refers to processing for removing the object from the target of processing in a latter stage (such as tracking processing).

The tracking decider 550 is a functional unit that decides whether tracking is performed for the object included in the recognition image on the basis of a result of rejection decision from the rejector 500. For example, the tracking decider 550 decides that the tracking is performed for the object not decided to be rejected by the rejector 500, and includes information indicating that the tracking is performed in the recognition image information of the object and outputs the information to the vehicle control device 6 as recognition information.

The road surface estimator 400, the clustering unit 450, the rejector 500, and the tracking decider 550 of the recognition processor 5 illustrated in FIG. 7 are realized by the FPGA 51 illustrated in FIG. 3. Note that a part or all of the road surface estimator 400, the clustering unit 450, the rejector 500, and the tracking decider 550 may be realized by execution of a program stored in the ROM 53 by the CPU 52, instead of the FPGA 51 as a hardware circuit.

An "image processing device" according to the present invention may be the road surface estimator 400 or the recognition processor 5 including the road surface estimator 400.

The functional units of the disparity value derivation unit 3 and the recognition processor 5 illustrated in FIG. 7 are conceptually described, and are not limited to such configurations. For example, the plurality of functional units illustrated as the independent functional units in the illustration of the disparity value derivation unit 3 and the recognition processor 5 in FIG. 7 may be configured as one functional unit. Meanwhile, in the disparity value derivation unit 3 and the recognition processor 5 illustrated in FIG. 7, the function included in one functional unit may be divided into a plurality of functions and configured as a plurality of functional units.

«Functional Block Configuration of Disparity Value Arithmetic Processor»

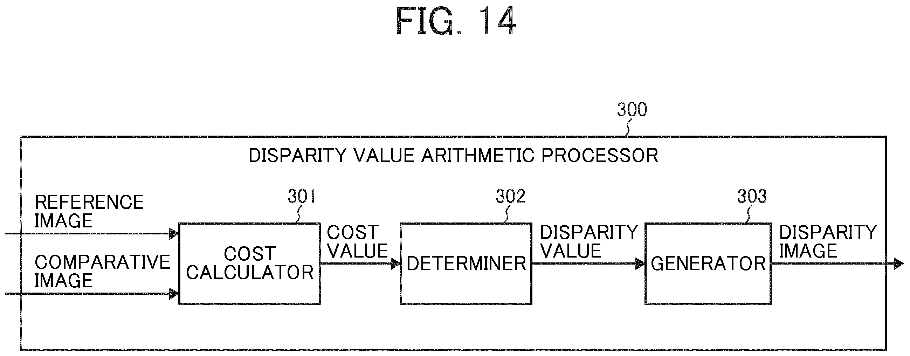

FIG. 14 is a diagram illustrating an example of a functional block configuration of the disparity value arithmetic processor of the object recognition device according to the first embodiment. Specific configurations and operations of the functional blocks of the disparity value arithmetic processor 300 will be described with reference to FIG. 14.

As illustrated in FIG. 14, the disparity value arithmetic processor 300 includes a cost calculator 301, a determiner 302, and a generator 303 (first generator).

The cost calculator 301 is a functional unit that calculates the cost values $C(p, d)$ of the candidate pixels $q(x + d, y)$ on the basis of the luminance value of the reference pixel $p(x, y)$ in the reference image Ia, and luminance values of the candidate pixels $q(x + d, y)$ that are candidates of a corresponding pixel. The corresponding pixel is identified by being shifted, by the shift amount d, from a pixel corresponding to the position of the reference pixel $p(x, y)$ on the epipolar line EL in the comparative image Ib on the basis of the reference pixel $p(x, y)$. To be specific, the cost calculator 301 calculates, as the cost value C, non-similarity between the reference region pb that is a predetermined region around the reference pixel p of the reference image Ia and the candidate region qb (the size is the same as the reference region pb) around the candidate pixel q of the comparative image Ib, by the block matching processing.

The determiner 302 is a functional unit that determines the shift amount d corresponding to the minimum value of the cost value C calculated by the cost calculator 301, as the disparity value dp about the pixel of the reference image Ia, the pixel being targeted in the calculation of the cost value C.

The generator 303 is a functional unit that generates a disparity image that is an image in which the pixel values of the pixels of the reference image Ia are replaced with the disparity values dp corresponding to the pixels on the basis of the disparity values dp determined in the determiner 302.

The cost calculator 301, the determiner 302, and the generator 303 illustrated in FIG. 14 are realized by the FPGA 31 illustrated in FIG. 3. A part or all of the cost calculator 301, the determiner 302, and the generator 303 may be realized by execution of a program stored in the ROM 33 by the CPU 32, instead of the FPGA 31 as a hardware circuit.

The cost calculator 301, the determiner 302, and the generator 303 of the disparity value arithmetic processor 300 illustrated in FIG. 14 are conceptually described, and are not limited to such configurations. For example, the plurality of functional units illustrated as the independent functional units in the illustration of the disparity value arithmetic processor 300 in FIG. 14 may be configured as one functional unit. Meanwhile, in the disparity value arithmetic processor 300 illustrated in FIG. 14, the function included in one functional unit may be divided into a plurality of functions and configured as a plurality of functional units.

«Functional Block Configuration of Road Surface Estimator»

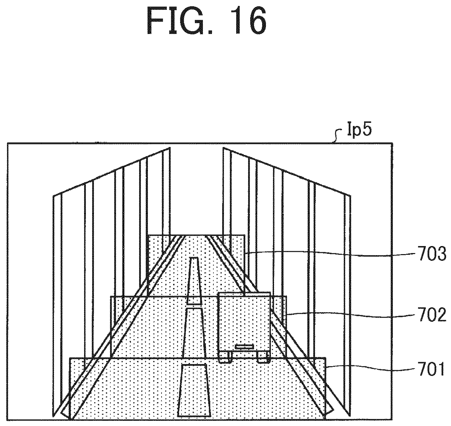

FIG. 15 is a diagram illustrating an example of a functional block configuration of the road surface estimator of the object recognition device according to the first embodiment. FIG. 16 is a diagram for describing a V map generation operation. Specific configurations and operations of the functional blocks of the road surface estimator 400 will be described with reference to FIGS. 15 and 16.

As illustrated in FIG. 15, the road surface estimator 400 includes an input unit 401, a V map generator 402 (second generator), a segment setting unit 403 (setting unit), an estimator 404, a smoothing unit 405, and an output unit 406.

The input unit 401 is a functional unit that inputs a disparity image from the disparity value arithmetic processor 300.

The V map generator 402 is a functional block that projects disparity values of disparity pixels of the disparity image input by the input unit 401 on corresponding disparity points on a V map to generate the V map. In generation of the V map by the V map generator 402, a y coordinate in the disparity image and a y coordinate on the V map are in a corresponding relationship, and the disparity value on a horizontal line, of a specific y coordinate in the disparity image is projected on any of disparity points on a horizontal line, of the corresponding y coordinate on the V map. Therefore, the disparity values included on the same horizontal line of the disparity image may have the same value, and thus the frequency of the disparity value is stored in the disparity point of an arbitrary coordinate on the V map. On a specific horizontal line of the disparity image, the same road surface has disparity values that are similar to each other. Therefore, the disparity points corresponding to the road surface on the V map are densely projected.

The V map generator 402 may project the disparity values of all the disparity pixels in the disparity image on the V map. However, the V map generator 402 may set predetermined regions (for example, projection regions 701 to 703 illustrated in FIG. 16), like a disparity image Ip5 illustrated in FIG. 16, and may project only the disparity values of the disparity pixels included in the regions. For example, a method for setting a predetermined number of projection regions having widths that accord with the width of the road surface, as illustrated in FIG. 16, using the characteristic that the road surface in a more distant position becomes narrower toward a vanishing point, can be considered. By regulating the projection regions in this way, mixture of noises other than the road surface onto the V map can be suppressed.

Further, the disparity pixels on one horizontal line in the disparity image may be appropriately thinned out and projected. The thinning out may be executed not only in the horizontal direction but also in the vertical direction.

Correspondence between the disparity image and the V map is desirably performed in such a manner that a lower side of the disparity image and a lower side of the V map correspond to each other because the road surface estimation is performed from a lower side to an upper side of the disparity image. However, correspondence may be performed at arbitrary positions as long as the disparity image and the V map uniquely correspond to each other.

The segment setting unit 403 is a functional unit that sets segments in accordance with the disparity points corresponding to the road surface, using the history road surface or the default road surface as the reference road surface, on the V map generated by the V map generator 402. To be specific, the segment setting unit 403 first selects two predetermined y coordinates of the disparity image when setting segments on the V map corresponding to the disparity image in accordance with the disparity points corresponding to the road surface. Next, the segment setting unit 403 determines two dp coordinates respectively including the two y coordinates in the reference road surface on the V map, and sets a partial region sandwiched by the determined two dp coordinates as a segment.

Note that the segment may set at predetermined widths rather than at even intervals. For example, since the resolution being low in a distant region (the optical resolution of the road surface being low) is known, a method for setting segments to be narrower in a more distant position can be considered. Therefore, the number of segments may just be determined according to the method.

Further, the segment is set in the dp coordinates. However, the segment may be divided in the y coordinates. For example, in a case where positions where the disparity points corresponding to the road surface are distributed can be identified on the V map, dividing the segments in the y direction enables processing for a more limited region than the case where the segments are set in the dp direction only. With the processing, an effect to suppress mixture of noises is improved, and the processing contributes to reduction of a processing time of the road surface estimation processing. The present embodiment will be described using the segment that is a strip-shaped partial region set in the dp direction only.

The estimator 404 is a functional unit that estimates the road surface in the segment set by the segment setting unit 403. As illustrated in FIG. 15, the estimator 404 includes a sample point selector 411, a shape estimator 412, a decider 413, and a setting unit 414.

The sample point selector 411 is a functional unit that selects at least one or more representative points (hereinafter, referred to as "sample points") from positions of dp coordinates in a segment of a processing target (hereinafter, the segment may be referred to as "target segment") set by the segment setting unit 403, of the disparity points (examples of frequency points) projected on the V map. As a method for selecting the sample points, for example, a method for simply selecting a disparity point having a largest frequency (the most frequent point), of the disparity points existing in the vertical (longitudinal) direction of the dp coordinates, may be employed. Alternatively, a method for more accurately grasping the disparity point of the road surface may be employed, the method including selecting focused dp coordinates and a plurality of right and left pixels of the focused dp coordinates from a lower direction to an upper direction on the V map to limit a region where the disparity points of the road surface can be included, and then selecting the most frequency point from the region. Alternatively, a position (coordinate) having no disparity point may be selected as the sample point. For example, in a case where the disparity point does not exist in the focused coordinate (dp, y) but disparity points with high frequency concentrate around the focused coordinate, there is a possibility that the disparity point of the coordinate (dp, y) is accidentally lacked. Therefore, this lacked position can be selected as the sample point. The sample point selector 411 may remove an inappropriate sample point from the selected sample points. With the removal, in the linear approximation for the sample point group by the shape estimator 412 below, the shape of the estimated road surface being made inappropriate by being affected by the inappropriate sample point (off-point) can be suppressed. As a method of removing the off-point, for example, the linear approximation is once performed by the least-squares method, using all the sample points in the target segment, then the sample point separated from the approximation straight line by a predetermine distance may be removed. In this case, the road surface estimated by the least-squares method again in the state where the off-point has been removed becomes the final estimated road surface.

The shape estimator 412 is a functional unit that performs estimation (road surface estimation) of the road surface shape from the sample point group selected by the sample point selector 411. Examples of a road surface estimation method include a method for performing the linear approximation for the sample point group by the least-squares method or the like and a method for estimating a curve shape using polynomial approximation. Further, a method for calculating reliability for use in success or failure decision for the result of the road surface estimation may be employed. For example, in a case of the linear approximation using the least-squares method, a correlation function may be used as the reliability. The description below will be given, using the linear approximation for the road surface estimation, unless otherwise particularly stated.

The decider 413 is a functional unit that decides whether the road surface estimation is appropriate (has succeeded) by deciding whether the road surface estimated by the shape estimator 412 satisfies a predetermined success or failure decision condition. For example, when the sample points are estimated to be aligned upward to the right, the decider 413 decides that the road surface is inappropriate (failed). A cause of occurrence of such a disadvantage includes independent execution of selection of individual sample points. In the success or failure decision by the decider 413, if the reliability of the road surface can be quantified, decision can be made using an arbitrary scale. For example, in a case where the number of sample points is smaller than a predetermined value, the road surface is estimated in limited information of the road surface. Therefore, there is a possibility of an inappropriate inclination. Therefore, success or failure can be decided using the predetermined value as a threshold. Further, a dispersion state of the sample point group can be employed in the success or failure decision. For example, in a case of using the least-squares method in estimating the road surface shape, the correlation function can also be calculated in calculating the approximation straight line. Therefore, if the correlation function takes a predetermined value or less, the road surface may be decided to be estimated from a sample point group in which the estimated road surface varies, and may be decided to be failed. Further, whether an angle made by the target segment and the road surface estimated in a previous segment falls within a predetermined range, using the characteristic that the road surface continues between segments, and the road surface may be decided to be failed if the angle does not fall within the predetermined range.

The setting unit 414 is a functional unit that sets an appropriate road surface in the target segment on the basis of the result of the success or failure decision by the decider 413. For example, the setting unit 414 sets the estimated road surface as the appropriate road surface in the target segment, when the road surface estimated by the shape estimator 412 is decided to be appropriate by the decider 413. Further, the setting unit 414 supplements the road surface with a road surface in place of the estimated road surface, when the road surface estimated by the shape estimator 412 is decided to be inappropriate by the decider 413. An example of a method for supplementing the road surface includes a method for assigning the default road surface or the history road surface.

The smoothing unit 405 is a functional unit that performs smoothing processing for the road surface estimated by the estimator 404. In a case where a plurality of segments are set on the V map, there is a possibility that the estimated road surface becomes discontinuous among the segments. Therefore, correction is performed in such a manner that a coordinate of the starting point of one estimated road surface and a coordinate of the end point of the other estimated road surface, of the estimated road surface of certain two segments, are caused to pass through a predetermined y coordinate. That is, continuity of the estimated road surface between the segments is secured by changing the inclination and the intercept on the V map of the estimated road surface. As the predetermined y coordinate, for example, a y coordinate of a middle point between the y coordinate of the starting point of the one estimated road surface and the y coordinate of the end point of the other estimated road surface can be employed. With such smoothing processing, correction may be performed when the estimation result is not appropriate in a certain segment. Therefore, there is an effect to improve the accuracy of the road surface estimation.

The output unit 406 is a functional unit that outputs, to the clustering unit 450, information (road surface information) of the estimated road surface on the V map, for which the smoothing processing has been performed by the smoothing unit 405. In a case where the information of the estimated road surface on the V map is not used in a latter stage (by the clustering unit 450 or the like) in particular, the road surface information may be stored in the RAM 54 illustrated in FIG. 3. In this case, the smoothing unit 405 and the output unit 406 may not be included.

The input unit 401, the V map generator 402, the segment setting unit 403, the estimator 404, the smoothing unit 405, and the output unit 406 illustrated in FIG. 15 are realized by the FPGA 51 illustrated in FIG. 3. A part or all of the input unit 401, the V map generator 402, the segment setting unit 403, the estimator 404, the smoothing unit 405,

and the output unit 406 may be realized by execution of a program stored in the ROM 53 by the CPU 52, instead of the FPGA 51 as a hardware circuit.

The input unit 401, the V map generator 402, the segment setting unit 403, the estimator 404, the smoothing unit 405, and the output unit 406 of the road surface estimator 400 illustrated in FIG. 15 are conceptually described, and are not limited to such configurations. For example, the plurality of functional units illustrated as the independent functional units in the illustration of the road surface estimator 400 in FIG. 15 may be configured as one functional unit. Meanwhile, in road surface estimator 400 illustrated in FIG. 15, the function included in one functional unit may be divided into a plurality of functions and configured as a plurality of functional units.

(Operation of Object Recognition Device)

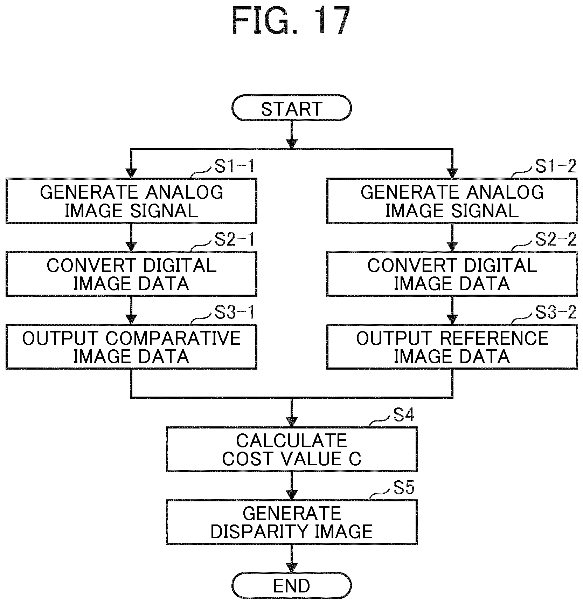

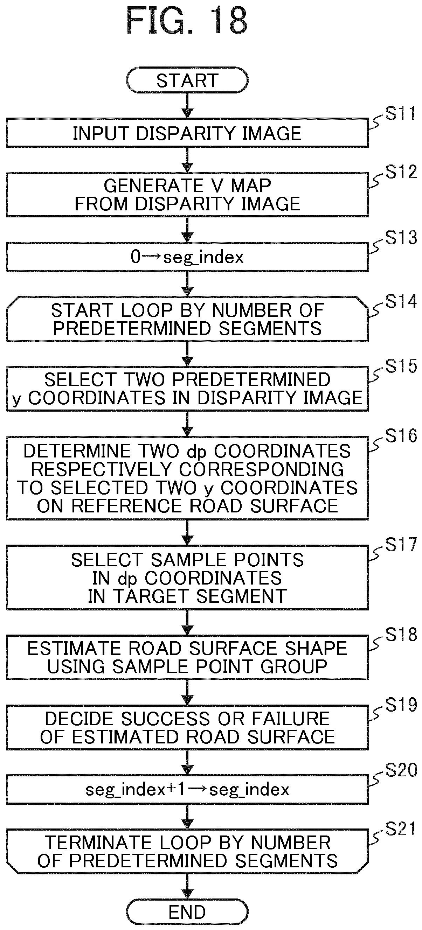

Next, a specific operation of the object recognition device 1 will be described with reference to FIGS. 17 and 18.

<Block Matching Processing of Disparity Value Derivation Unit>

FIG. 17 is a flowchart illustrating an example of an operation of block matching processing of the disparity value derivation unit according to the first embodiment. A flow of an operation of the block matching processing of the disparity value derivation unit 3 of the object recognition device 1 will be described with reference to FIG. 17.

In step S1-1, the image acquisition unit 100b of the disparity value derivation unit 3 captures the subject in front by the left camera (imaging unit 10b), generates the analog image signal, and obtains the luminance image as an image based on the image signal. With the processing, the image signal serving as the target of the image processing in the latter stage can be obtained. Then, the processing proceeds to step S2-1.

In step S1-2, the image acquisition unit 100a of the disparity value derivation unit 3 captures the subject in front by the right camera (imaging unit 10a), generates the analog image signal, and obtains the luminance image as an image based on the image signal. With the processing, the image signal serving as the target in the image processing in the latter stage can be obtained. Then, the processing proceeds to step S2-2.

In step S2-1, the converter 200b of the disparity value derivation unit 3 removes a noise from the analog image signal obtained through capturing by the imaging unit 10b, and converts the analog image signal into the image data in a digital format. With the conversion into the image data in a digital format, the image processing for every pixel becomes possible for the image based on the image data. Then, the processing proceeds to step S3-1.

In step S2-2, the converter 200a of the disparity value derivation unit 3 removes a noise from the analog image signal obtained through capturing by the imaging unit 10a, and converts the analog image signal into the image data in a digital format. With the conversion into the image data in a digital format, the image processing for every pixel becomes possible for the image based on the image data. Then, the processing proceeds to step S3-2.

In step S3-1, the converter 200b outputs the image based on the image data in a digital format converted in step S2-1 as the comparative image Ib in the block matching processing. With the processing, the image serving as the comparison target for obtaining the disparity values in the block matching processing can be obtained. Then, the processing proceeds to step S4.

In step S3-2, the converter 200a outputs the image based on the image data in a digital format converted in step S2-2 as the reference image Ia in the block matching processing. With the processing, the image serving as the reference for obtaining the disparity values in the block matching processing can be obtained. Then, the processing proceeds to step S4.

In step S4, the cost calculator 301 of the disparity value arithmetic processor 300 of the disparity value derivation unit 3 calculates the cost values $C(p, d)$ of the candidate pixels $q(x + d, y)$ on the basis of the luminance value of the reference pixel $p(x, y)$ in the reference image Ia, and luminance values of the candidate pixels $q(x + d, y)$ that are candidates of a corresponding pixel. The corresponding pixel is identified by being shifted, by the shift amount d, from a pixel corresponding to the position of the reference pixel $p(x, y)$ on the epipolar line EL in the comparative image Ib on the basis of the reference pixel $p(x, y)$. To be specific, the cost calculator 301 calculates, as the cost value C, non-similarity between the reference region pb that is a predetermined region around the reference pixel p of the reference image Ia and the candidate region qb (the size is the same as the reference region pb) around the candidate pixel q of the comparative image Ib, by the block matching processing. Then, the processing proceeds to step S5.

In step S5, the determiner 302 of the disparity value arithmetic processor 300 of the disparity value derivation unit 3 determines the shift amount d corresponding to the minimum value of the cost value C calculated by the cost calculator 301, as the disparity value dp about the pixel of the reference image Ia, the pixel being targeted in the calculation of the cost value C. Then, the generator 303 of the disparity value arithmetic processor 300 of the disparity value derivation unit 3 generates the disparity image that is the image in which the luminance values of the pixels of the reference image Ia are expressed by the disparity values dp corresponding to the pixels, on the basis of the disparity values dp determined by the determiner 302. The generator 303 outputs the generated disparity image to the recognition processor 5.

The block matching processing has been described as an example of stereo matching processing. However, the embodiment is not limited to the example, and may be processing using a semi-global matching (SGM) method.

<Road Surface Estimation Processing>

FIG. 18 is a flowchart illustrating an example of an operation of road surface estimation processing of the road surface estimator according to the first embodiment. A flow of an operation of the road surface estimation processing of the road surface estimator 400 of the recognition processor 5 will be described with reference to FIG. 18.

In step S11, the input unit 401 inputs the disparity image from the disparity value arithmetic processor 300. As the disparity image, a disparity image generated in the disparity value derivation unit 3 that configures the stereo camera may be directly input. The information may be stored in a recording medium such as a compact disk (CD), a digital versatile disc (DVD), or a hard disk drive (HDD), or a network storage, in advance, and the disparity image may be read from the storage and used, as needed. Further, as the disparity image, only one image may be input or moving image data may be sequentially input in every frame. Then, the processing proceeds to step S12.

In step S12, the V map generator 402 projects the disparity values of the disparity pixels of the disparity image input by the input unit 401 on the corresponding disparity points on the V map to generate the V map. Then, the processing proceeds to step S13.

In step S13, the road surface estimator 400 initializes an index to 0, where the index in currently processing is seg_index, in order to start the road surface estimation for the segments set by the segment setting unit 403. A value range of the seg_index is from 0 to (the number of division - 1). However, in the description below, description will be given using the index as (the number of segments - 1). Then, the processing proceeds to step S14.

In step S14, the estimator 404 repeats the processing of the road surface estimation and the success or failure decision (steps S17 to S20) by the predetermined number of segments set by the segment setting unit 403 described below. Then, the processing proceeds to step S15.

In step S15, when setting the segments on the V map in accordance with the disparity points corresponding to the road surface, the segment setting unit 403 first selects predetermined two y coordinates of the disparity image. Then, the processing proceeds to step S16.

In step S16, the segment setting unit 403 determines the two dp coordinates respectively including the selected two y coordinates in the reference road surface on the V map, and sets the partial region sandwiched by the determined two dp coordinates as the segment. The horizontal width (the width in the dp direction) of the set segment may not be the same value as that of other segments. For example, when finely estimating the distant road surface, the segment width may just be set to be smaller toward a more distant place (as the dp value becomes smaller on the V map). Further, by finely setting the segments, the road surface having a more complicated shape (for example, a shape of a sloping road going up and down from a middle of a level road surface) can be grasped. Then, the processing proceeds to step S17.

In step S17, the sample point selector 411 of the estimator 404 selects at least one or more sample points from the positions of the dp coordinates in the target segment that is the segment set by the segment setting unit 403, of the disparity points projected on the V map. At this time, the number of the sample points selected in the dp coordinates is not limited to one, and a plurality of the sample points may be selected. Further, there are dp coordinates where the disparity points do not exist in the vertical direction on the V map, and thus dp coordinates from which the sample points are not selected may exist. Then, the processing proceeds to step S18.

In step S18, the shape estimator 412 of the estimator 404 performs estimation of the road surface shape (road surface estimation) from the sample point group selected by the sample point selector 411. Then, the processing proceeds to step S19.

In step S19, the decider 413 of the estimator 404 decides whether the road surface estimation is appropriate (has succeeded) by deciding whether the road surface estimated by the shape estimator 412 satisfies a predetermined success or failure decision condition. The setting unit 414 of the estimator 404 sets the appropriate road surface in the target segment based on the result of the success or failure decision by the decider 413. For example, the setting unit 414 sets the estimated road surface as the appropriate road surface in the target segment, when the road surface estimated by the shape estimator 412 is decided to be appropriate by the decider 413. Further, the setting unit 414 supplements the road surface with a road surface in place of the estimated road surface, when the road surface estimated by the shape estimator 412 is decided to be inappropriate by the decider 413. Then, the processing proceeds to step S20.

In step S20, the road surface estimator 400 increments the index seg_index by one to have another segment set by the segment setting unit 403 as the target segment. Then, the processing proceeds to step S21.

In step S21, the road surface estimator 400 decides whether the processing of step S15 to S20 has been performed by the predetermined number of segments by the segment setting unit 403 and the estimator 404. When the processing has not been performed by the predetermined number of segments, the processing returns to step S15. When the processing has been performed by the predetermined number of segments, the smoothing unit 405 performs the smooth processing for the road surface estimated by the estimator 404. The output unit 406 then outputs, to the clustering unit 450, the information (road surface information) of the estimated road surface on the V map, for which the smooth processing has been performed by the smoothing unit 405, and terminates the road surface estimation processing. In the smooth processing by the smoothing unit 405, after the estimated road surface of the focused segment is obtained, this estimated road surface and the estimated road surface of a previous segment of the focused segment may be sequentially smoothed.

The road surface estimation processing by the road surface estimator 400 is performed by the processing of steps S11 to S21.

In the flow illustrated in FIG. 18, the processing of steps S15 to S19 may be executed in series for every segment set by the segment setting unit 403, or the processing of the steps may be executed in parallel in the set segment.

As described above, the history road surface or the default road surface is used as the reference road surface, and the y coordinate in the selected disparity image is converted into the dp coordinate on the V map, using the reference road surface, and the segment is set. With the processing, the position of the disparity point where the disparity value corresponding to the road surface is supposed to be projected can be predicted to a certain extent, and the accuracy of the road surface estimation can be improved.

Regarding an object recognition device according to a second embodiment, different points from the object recognition device 1 according to the first embodiment will be mainly described. In the first embodiment, the operation to use the history road surface or the default road surface as it is as the reference road surface, and set the segment has been described. In the present embodiment, an operation to fix an intercept of a reference road surface to a predetermined position and set a segment will be described.

A hardware configuration and a functional block configuration of the object recognition device according to the present embodiment are similar to the configurations described in the first embodiment. Further, functional block configurations of a disparity value arithmetic processor 300 and a road surface estimator 400 according to the present embodiment are also similar to the configurations described in the first embodiment. Further, block matching processing of a disparity value derivation unit 3 according to the present embodiment is also similar to the operation described in the first embodiment.

(Operation of Road Surface Estimator)

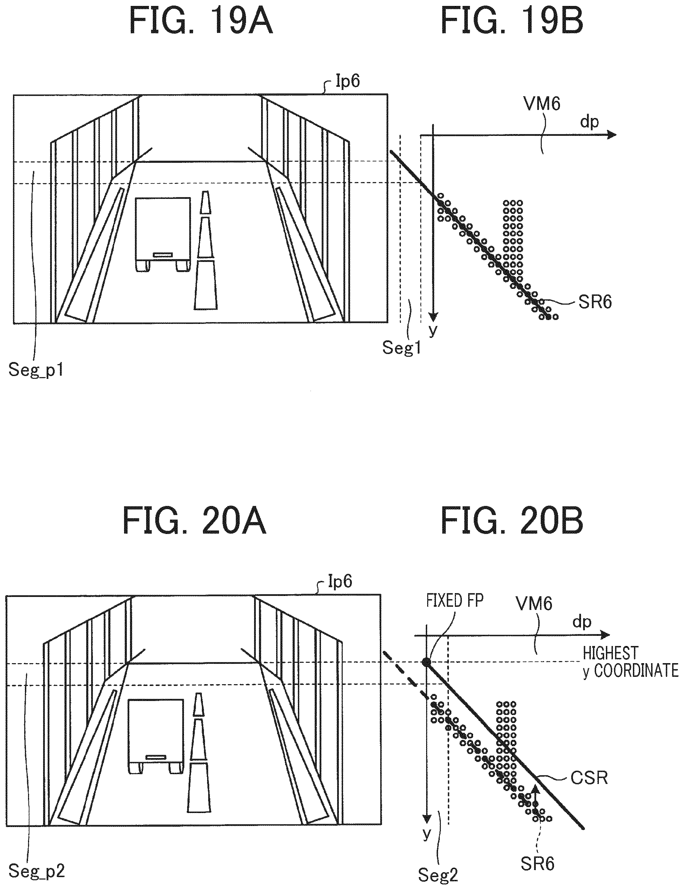

FIGS. 19A and 19B are diagrams illustrating an example of a case where a reference road surface on a V map is unsuitable for setting a segment. FIGS. 20A and 20B are diagrams for describing an operation to set a segment using a reference road surface having a fixed point on a V map as an intercept in the second embodiment. A specific operation of the road surface estimator 400 according to the present embodiment will be described with reference to FIGS. 19A and 19B and 20A and 20B. As described above, the functional block configuration of the road surface estimator 400 according to the present embodiment is similar to the configuration described in the first embodiment.

A segment setting unit 403 of the present embodiment is a functional unit that sets a segment in accordance with a disparity point corresponding to a road surface, using a corrected reference road surface in which a reference road surface such as a history road surface or a default road surface is corrected to pass through a predetermined fixed point, on a V map generated by a V map generator 402.

As illustrated in FIG. 19B, in a case where a reference road surface SR6 illustrated on a V map VM6 in a scene of a downhill or the like exists at a lower position than the default road surface, a region not falling within the V map VM6 may be set as the segment if the setting of the segment is similarly performed to the first embodiment, using the reference road surface SR6. This may also occur when the reference road surface SR6 exists at a higher position, in addition to the case of a lower position. For example, a segment Seg_p1 that is a partial region sandwiched by two y coordinates selected on a disparity image Ip6 illustrated in FIG. 19A is obtained. Then, two dp coordinates respectively including the two y coordinates in the reference road surface SR6 such as the history road surface are determined. A segment Seg1 that is a partial region sandwiched by the two dp coordinates on the V map VM6 is set to a position of a disparity value dp < 0, that is, a position outside the V map VM6. This set segment Seg1 is a region not serving as a target of processing and is thus set as an unnecessary region. The reason is that the position of the segment Seg_p1 of the disparity image represents already higher position than a vanishing point of the road surface, and thus the region becomes a region where the road surface does not exist.

Further, the history road surface differs among the frames, and thus the system becomes easily unstable. When pitching occurs in a vehicle 70, for example, the history road surface may vary in an up and down direction in every frame, and the segment may be set to a position outside the V map, as described above.

Therefore, in the present embodiment, as illustrated in FIG. 20B, a fixed point FP is provided, and the reference road surface SR6 is corrected to have an inclination of the reference road surface SR6, using the fixed point FP as an intercept, and is used as a corrected reference road surface CSR. For example, when a segment Seg_p2 is set to a highest segment in the disparity image Ip6 illustrated in FIG. 20A, the segment setting unit 403 sets a predetermined position on the V map VM6, the position having a y coordinate on an upper side of the segment Seg_p2 and satisfying the disparity value dp = 0 as the fixed point FP. In this case, the fixed point FP becomes an intercept of a straight line because of the disparity value dp = 0.

Next, the segment setting unit 403 moves the reference road surface SR6 in parallel while keeping the inclination to cause the reference road surface SR6 to pass through the fixed point FP, and uses the parallel-moved road surface as the corrected reference road surface CSR. The segment setting unit 403 then selects two predetermined y coordinates (first coordinates) of the disparity image Ip6, and determines two dp coordinates (second coordinates) respectively including the two y coordinates in the corrected reference road surface CSR on the V map VM6. For example, a segment Seg2 is set as a partial region sandwiched by the determined two dp coordinates, as illustrated in FIG. 20B. That is, a y coordinate in the disparity image Ip6 can be converted into a dp coordinate on the V map VM6, using the corrected reference road surface CSR.

As described above, when the fixed point FP is set to the highest y coordinate, a left end of the segment Seg2 on the V map VM6 can be fixed to the disparity value dp = 0, and a predetermined number of segments can be set while dynamically changing widths in accordance with the inclination of the corrected reference road surface CSR. That is, the number of segments is fixed, and the widths and positions of the segments can be dynamically changed. Further, the reference road surface SR6 is corrected to the corrected reference road surface CSR that passes through the fixed point FP and is used. Therefore, setting the segment on the V map VM6 to the position of the disparity value dp < 0, that is, to a position outside the V map VM6 can be suppressed.

Note that the road surface estimation processing by a road surface estimator 400 is similar to the first embodiment except that the operations of steps S15 and S16, of the flow illustrated in FIG. 18, are replaced with the operation of the segment setting unit 403 according to the above-described present embodiment.

Further, in the example illustrated in FIG. 20, an example of the corrected reference road surface CSR having the fixed point FP as the intercept has been described. However, an arbitrary fixed point may be set as long as the corrected reference road surface is set to pass through the fixed point. For example, the fixed point may be set in such a manner that a right end of the segment corresponds to a right end of the V map in order to handle an uphill.

Further, in the example illustrated in FIG. 20, as for the inclination of the corrected reference road surface, an example of moving the reference road surface in parallel while keeping the inclination has been described. However, an arbitrary inclination may be set. That is, the reference road surface is corrected to pass through the fixed point and include the predetermined inclination to obtain the corrected reference road surface.

Regarding an object recognition device according to a third embodiment, different points from the object recognition device 1 according to the first embodiment will be mainly described. In the first embodiment, the operation to use the history road surface or the default road surface as it is as the reference road surface, and set the segment has been described. In the present embodiment, an operation to set a segment, using a road surface estimated on a V map corresponding to a focused frame as a reference road surface, will be described.

A hardware configuration and a functional block configuration of the object recognition device according to the present embodiment are similar to the configurations described in the first embodiment. Further, functional block configurations of a disparity value arithmetic processor 300 and a road surface estimator 400 according to the present embodiment are also similar to the configurations described in the first embodiment. Further, block matching processing of a disparity value derivation unit 3 according to the present embodiment is also similar to the operation described in the first embodiment.

(Operation of Road Surface Estimator)

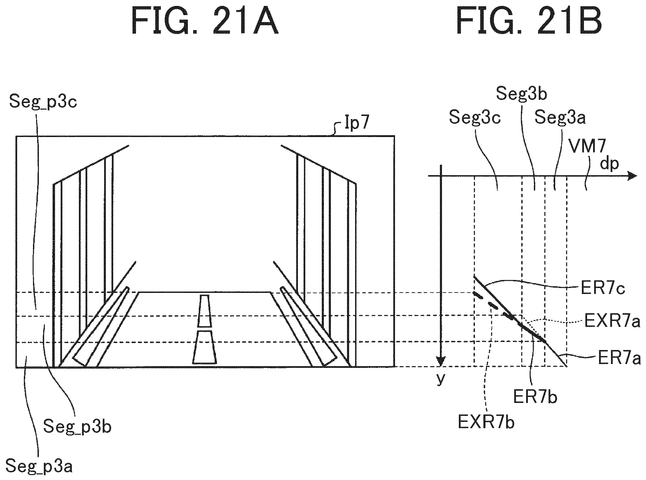

FIGS. 21A and 21B are diagrams for describing an operation to set a segment using a road surface estimated with a focused frame in a third embodiment. A specific operation of the road surface estimator 400 according to the present embodiment will be described with reference to FIGS. 21A and 21B. As described above, the functional block configuration of the road surface estimator 400 according to the present embodiment is similar to the configuration described in the first embodiment.

A segment setting unit 403 of the present embodiment is a functional unit that sets a segment in accordance with a disparity point corresponding to a road surface, using, as a reference road surface, a road surface estimated on a V map corresponding to a focused frame, the V map having been generated by a V map generator 402.

In the first embodiment and the second embodiment, the history road surface or the default road surface has been used as the reference road surface. However, strictly, even the history road surface may have a difference from a road surface to be estimated in the focused frame. For example, when pitching occurs in a vehicle 70, the estimated road surface substantially varies up and down among frames. Therefore, even if the history road surface is used, grasping positions where disparity points of the road surface are distributed on the V map corresponding to the focused frame with accuracy is difficult.

Therefore, in the present embodiment, the road surface estimated on the V map corresponding to the focused frame is used as the reference road surface. That is, as illustrated in FIG. 21B, a segment setting unit 403 sets a segment, using, as the reference road surface, the road surface based on the estimated road surface of a segment for which road surface estimation has been performed at a previous step on a V map VM7 corresponding to the focused frame. Assume that a disparity image Ip7 illustrated in FIG. 21A is an image indicating a situation where the vehicle reaches a downhill where the road surface gets out of view in the middle. On the V map VM7 illustrated in FIG. 21B, illustration of disparity points is omitted for simple description of the reference road surface.

Assume that the segment setting unit 403 executes processing from a lower segment in order. First, a segment Seg_p3a on the disparity image Ip7 is set. At this time, an already estimated road surface does not exist on the V map VM7. Therefore, initially, an estimated road surface ER7a, using the history road surface or the default road surface as an estimated road surface, is used as the reference road surface. The segment setting unit 403 sets a segment Seg3a on the V map VM7, from the segment Seg_p3a set on the disparity image Ip7, using the estimated road surface ER7a as the reference road surface.

Next, the segment setting unit 403 sets a segment Seg_p3b on an upper side of the segment Seg_p3a on the disparity image Ip7. The segment setting unit 403 uses, as the reference road surface, an extended road surface EXR7a that is an extended estimated road surface ER7a estimated in the segment Seg3a, in order to set a segment on the V map VM7, the segment corresponding to the segment Seg_p3b. The segment setting unit 403 sets the segment Seg3b on the V map VM7 from the segment Seg_p3b set on the disparity image Ip7, using the extended road surface EXR7a as the reference road surface.

Further, the segment setting unit 403 sets a segment Seg_p3c on an upper side of the segment Seg_p3b on the disparity image Ip7. The segment setting unit 403 uses, as the reference road surface, an extended road surface EXR7b that is an extended estimated road surface ER7b estimated in the segment Seg3b, in order to set a segment on the V map VM7, the segment corresponding to the segment Seg_p3c. The segment setting unit 403 sets the segment Seg3c on the V map VM7 from the segment Seg_p3c set on the disparity image Ip7, using the extended road surface EXR7b as the reference road surface. An estimator 404 then obtains an estimated road surface ER7c in the set segment Seg3c. That is, a y coordinate in the disparity image Ip7 can be converted into a dp coordinate on the V map VM7, using the extended road surface of the estimated road surface of the segment for which the road surface estimation has been performed in a previous step as the reference road surface.

Here, the road surface (estimated road surface ER7b) estimated in the segment Seg3b of the V map VM7 has a gentler inclination than another estimated road surface. Therefore, the segment Seg3c set using the extended road surface EXR7b that is the extended estimated road surface ER7b is a segment with a wide width. In this way, by setting the segment, using the extended road surface of the estimated road surface of the segment for which the road surface estimation has been performed in a previous step, as the reference road surface, the grade of the road surface can be grasped with higher accuracy. Similarly, when the processing of setting a segment in a scene of an uphill is executed, the inclination of the estimated road surface becomes steep this time. Therefore, the width of the segment corresponding to the position of the disparity point of the steep road surface becomes narrow.

The extended road surface is not limited to the extended estimated road surface of the segment for which the road surface estimation has been performed in a previous step, and for example, a road surface extended from an arbitrary road surface of the road surfaces estimated prior to the focused segment may be used. For example, in a case where the estimated road surface of the segment for which the road surface estimation has been performed in a previous step is decided to be failed in success or failure decision, there is a possibility that the inclination of the estimated road surface is inappropriate. Therefore, the extended road surface of the estimated road surface for which the success or failure decision has most recently succeeded may be used. Further, an average road surface of the road surface estimated in a plurality of segments prior to the focused segment may be used.

Further, as for the first segment, the estimated road surface of the segment for which the road surface estimation has been performed in a previous step cannot be obtained. Therefore, the history road surface or the default road surface has been used as the reference road surface. However, the embodiment is not limited to the example, and the estimated road surface in the same segment of one previous frame may be used.

(Road Surface Estimation Processing)

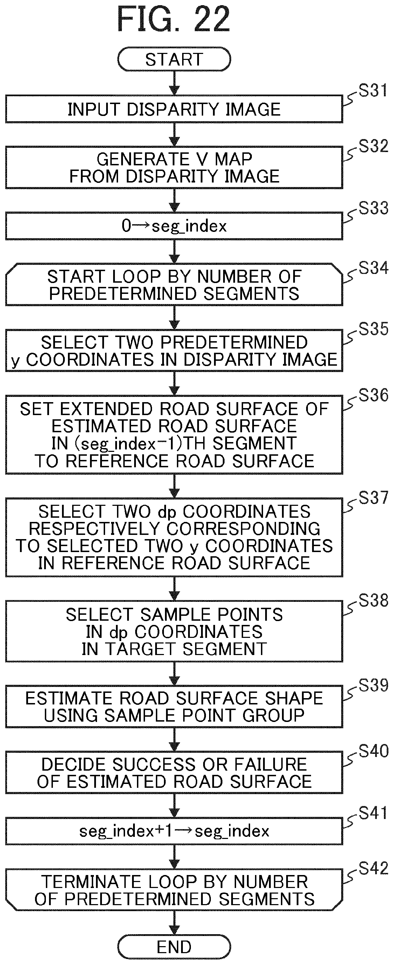

FIG. 22 is a flowchart illustrating an example of an operation of road surface estimation processing of a road surface estimator according to the third embodiment. A flow of an operation of road surface estimation processing of a road surface estimator 400 of a recognition processor 5 according to the present embodiment will be described with reference to FIG. 22.

Processing of steps S31 to S33 is similar to the processing of steps S11 to S13 illustrated in FIG. 18 of the first embodiment. The processing proceeds to step S34.

In step S34, the estimator 404 repeats the processing of the road surface estimation and the success or failure decision (steps S37 to S41) by a predetermined number of segments set by the segment setting unit 403 described below. Then, the processing proceeds to step S35.

In step S35, when setting the segments on the V map in accordance with disparity points corresponding to the road surface, the segment setting unit 403 first selects predetermined two y coordinates (first coordinates) of a disparity image. Then, the processing proceeds to step S36.

In step S36, the segment setting unit 403 sets the extended road surface of the estimated road surface of the segment for which the road surface estimation has been performed in one previous step, as the reference road surface to be used for the road surface estimation for the segment to be set on the V map. When first setting the segment on the V map, the segment setting unit 403 sets the history road surface or the default road surface as the reference road surface because an already estimated road surface does not exist. Then, the processing proceeds to step S37.

In step S37, the segment setting unit 403 determines two dp coordinates (second coordinates) respectively including the selected two y coordinates in the reference road surface set in step S36, and sets a partial region sandwiched by the determined two dp coordinates as a segment. The horizontal width (the width in the dp direction) of the set segment may not be the same value as that of other segments. For example, when finely estimating a distant road surface, the segment width may just be set to be smaller toward a more distant place (as the dp value becomes smaller on the V map). Further, by finely setting the segments, the road surface having a more complicated shape (for example, a shape of a sloping road going up and down from a middle of a level road surface) can be grasped. Then, the processing proceeds to step S38.

Processing of steps S38 to S41 is similar to the processing of steps S17 to S20 illustrated in FIG. 18 of the first embodiment. The processing proceeds to step S42.

In step S42, the road surface estimator 400 decides whether the processing of steps S35 to S41 has been performed by a predetermined number of segments by the segment setting unit 403 and the estimator 404. When the processing has not been performed by the predetermined number of segments, the processing returns to step S35. When the processing has been performed by the predetermined number of segments, a smoothing unit 405 performs smoothing processing for the road surface estimated by the estimator 404. An output unit 406 then outputs, to a clustering unit 450, information (road surface information) of the estimated road surface on the V map for which the smoothing processing has been performed by the smoothing unit 405, and terminates the road surface estimation processing. In the smooth processing by the smoothing unit 405, after the estimated road surface of the focused segment is obtained, this estimated road surface and the estimated road surface of a previous segment of the focused segment may be sequentially smoothed.

The road surface estimation processing by the road surface estimator 400 of the present embodiment is performed by the processing of steps S31 to S42 above.

As described above, by setting a segment, using the extended road surface of the estimated road surface of the segment for which the road surface estimation has been performed in a previous step as the reference road surface, the grade of the road surface can be grasped with higher accuracy.

In the above-described embodiments, the cost value C is an evaluation value indicating non-similarity. However, the cost value C may be an evaluation value indicating similarity. In this case, the shift amount d by which the cost value C as similarity is maximized (takes an extreme value) becomes the disparity value dp.

In the above-described embodiments, the object recognition device mounted on the automobile as the vehicle 70 has been described. However, an embodiment is not limited to the case. For example, as an example of another vehicle, the object recognition device may be mounted on a vehicle such as a motorcycle, a bicycle, a wheelchair, or an agricultural cultivator. Further, as an example of a moving body, not only the vehicle but also a robot or the like can be employed.

In the above-described embodiments, when at least any of the function units of the disparity value derivation unit 3 and the recognition processor 5 of the object recognition device is realized by execution of a program, the program is provided by being incorporated in a ROM or the like in advance. The program executed in the objection recognition devices according to the above-described embodiments may be provided by being recorded on a computer-readable recording medium such as a CD-ROM, a flexible disk (FD), a compact disk recordable (CD-R), or a DVD, in an installable or executable format file. The program executed in the objection recognition devices according to the above-described embodiments may be provided by being stored in a computer connected to a network such as the Internet and downloaded through the network.

The program executed in the objection recognition devices according to the above-described embodiments may be provided or distributed through the network such as the Internet. The program executed in the objection recognition devices according to the above-described embodiments has a module configuration including at least any of the above-described functional units. As actual hardware, the CPU 52 (CPU 32) reads the program from the ROM 53 (ROM 33) and executes the program, so that the above-described functional units are loaded on the main storage device (RAM 54 (RAM 34) or the like) and are generated.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses.

The processing apparatuses can compromise any suitably programmed apparatuses such as a general-purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

**Claims**

1. An image processing device (400, 5) comprising:

    a setting unit (403) configured to determine, based on arbitrary two first coordinates in a vertical direction in a distance image for a subject, two second coordinates in a frequency image using a predetermined method, and to set a partial region on the frequency image sandwiched by the two second coordinates as a segment,
    wherein the frequency image indicates frequency distribution of distance values by associating positions of the first coordinates in the distance image and distance values represented by the positions of the first coordinates, and
    wherein each of the second coordinates represents a distance value intersecting with a first coordinate axis of the frequency image; and
    a shape estimator (412) configured to estimate a shape of a road surface, based on frequency points indicating frequencies of the distance values represented by the set segment.

2. The image processing device (400, 5) according to claim 1, wherein
    the setting unit (403) determines the two second coordinates respectively corresponding to the two first coordinates in a reference road surface on the frequency image.

3. The image processing device (400, 5) according to claim 2, wherein the reference road surface is one of:

    a history road surface based on a road surface assumed to be a level road surface; and
    a road surface estimated in a frame prior to a frame corresponding to the distance image for the subject.

4. The image processing device (400, 5) according to claim 2, wherein the reference road surface is a road surface passing through a predetermined fixed point.

5. The image processing device (400, 5) according to claim 4, wherein the reference road surface has the fixed point as an intercept in the frequency image, and having an inclination that is the same as 1) the history road surface based on a road surface assumed to be a level road surface, or 2) a road surface estimated in a frame prior to a frame corresponding to the distance image for the subject.

6. The image processing device (400, 5) according to claim 2, wherein the reference road surface is an extended road surface that is an extended estimated road surface in a segment for which the shape of a road surface has been estimated prior to a segment to be set.

7. The image processing device (400, 5) according to any one of claims 1 to 6, further comprising:

    a decider (413) configured to decide whether a road surface estimated by the shape estimator (412) satisfies a predetermined condition.

8. The image processing device (400, 5) according to any one of claims 1 to 7, further comprising:

a selector (411) configured to select 0 or more sample points in the positions of the distance values from the frequency points, in the segment set by the setting unit (403), wherein

the shape estimator (412) estimates the shape of a road surface from a group of the sample points selected by the selector (411).

9. An object recognition device (1) comprising:

a first imaging unit (100a) configured to capture a subject to obtain a first captured image;

a second imaging unit (100b) disposed in a position different from a position of the first imaging unit (100a), and configured to capture the subject to obtain a second captured image;

a first generator (303) configured to generate the distance image based on the distance values obtained for the subject from the first captured image and the second captured image; and

the image processing device (400) according to any one of claims 1 to 8, further including a second generator (402) configured to generate the frequency image based on the distance image.

10. A device control system (60) comprising:

the object recognition device (1) according to claim 9; and

a control device (6) configured to control a control target based on information of an object detected by the object recognition device (1).

11. An image processing method comprising:

determining (S16, S37), based on arbitrary two first coordinates in a vertical direction in a distance image for a subject, two second coordinates in a frequency image using a predetermined method,

wherein the frequency image indicates frequency distribution of distance values by associating positions of the first coordinates in the distance image and distance values represented by the positions of the first coordinates, and

wherein each of the second coordinates represents a distance value intersecting with a first coordinate axis of the frequency image; and

setting (S16, S37) a partial region on the frequency image sandwiched by the two second coordinates as a segment; and

estimating (S18, S39) a shape of a road surface, based on frequency points indicating frequencies of the distance values represented by the set segment.

12. A carrier medium carrying computer readable code for controlling a computer to carry out the image processing method of claim 11.

# FIG. 1A

# FIG. 1B

# FIG. 2

# FIG. 3

# FIG. 4

# FIG. 5A

# FIG. 5B

# FIG. 6

FIG. 7

EP 3 306 525 A2

FIG. 8A          FIG. 8B

FIG. 9A          FIG. 9B

29

# FIG. 10A

Ip2

# FIG. 10B

VM2

ER2

DR

# FIG. 11A

Ip3

# FIG. 11B

VM3

DR

ER3

FIG. 12A

FIG. 12B

FIG. 13A

611  613  614  612  Ip4

FIG. 13B

611a  613a  614a  612a  UM

DISPARITY
VALUE dp

x

# FIG. 14

# FIG. 15

ROAD SURFACE ESTIMATOR 400

| | |
|---|---|
| 401 INPUT UNIT | |
| 402 V MAP GENERATOR | |
| 403 SEGMENT SETTING UNIT | |
| 404 ESTIMATOR | 411 SAMPLE POINT SELECTOR, 412 SHAPE ESTIMATOR, 413 DECIDER, 414 SETTING UNIT |
| 405 SMOOTHING UNIT | |
| 406 OUTPUT UNIT | |

DISPARITY IMAGE → ROAD SURFACE INFORMATION

EP 3 306 525 A2

# FIG. 16

Ip5

703

702

701

# FIG. 17

```
                    ┌─────────┐
                    │  START  │
                    └────┬────┘
           ┌─────────────┴─────────────┐
           │                           │
    ┌──────▼──────┐ S1-1        ┌──────▼──────┐ S1-2
    │ GENERATE     │            │ GENERATE     │
    │ ANALOG       │            │ ANALOG       │
    │ IMAGE SIGNAL │            │ IMAGE SIGNAL │
    └──────┬──────┘             └──────┬──────┘
    ┌──────▼──────┐ S2-1        ┌──────▼──────┐ S2-2
    │ CONVERT      │            │ CONVERT      │
    │ DIGITAL      │            │ DIGITAL      │
    │ IMAGE DATA   │            │ IMAGE DATA   │
    └──────┬──────┘             └──────┬──────┘
    ┌──────▼──────┐ S3-1        ┌──────▼──────┐ S3-2
    │ OUTPUT       │            │ OUTPUT       │
    │ COMPARATIVE  │            │ REFERENCE    │
    │ IMAGE DATA   │            │ IMAGE DATA   │
    └──────┬──────┘             └──────┬──────┘
           └─────────────┬─────────────┘
                  ┌───────▼───────┐ S4
                  │ CALCULATE      │
                  │ COST VALUE C   │
                  └───────┬───────┘
                  ┌───────▼───────┐ S5
                  │ GENERATE       │
                  │ DISPARITY IMAGE│
                  └───────┬───────┘
                     ┌────▼────┐
                     │   END   │
                     └─────────┘
```

# FIG. 18

START

INPUT DISPARITY IMAGE — S11

GENERATE V MAP
FROM DISPARITY IMAGE — S12

$0 \rightarrow$ seg_index — S13

START LOOP BY NUMBER OF
PREDETERMINED SEGMENTS — S14

SELECT TWO PREDETERMINED
y COORDINATES IN DISPARITY IMAGE — S15

DETERMINE TWO dp COORDINATES
RESPECTIVELY CORRESPONDING
TO SELECTED TWO y COORDINATES
ON REFERENCE ROAD SURFACE — S16

SELECT SAMPLE POINTS
IN dp COORDINATES
IN TARGET SEGMENT — S17

ESTIMATE ROAD SURFACE SHAPE
USING SAMPLE POINT GROUP — S18

DECIDE SUCCESS OR FAILURE
OF ESTIMATED ROAD SURFACE — S19

seg_index+1 $\rightarrow$ seg_index — S20

TERMINATE LOOP BY NUMBER
OF PREDETERMINED SEGMENTS — S21

END

# FIG. 19A

Ip6

Seg_p1

# FIG. 19B

VM6

dp

y

Seg1

SR6

# FIG. 20A

Ip6

Seg_p2

# FIG. 20B

FIXED FP

VM6

dp

HIGHEST
y COORDINATE

CSR

y

Seg2

SR6

# FIG. 21A

# FIG. 21B

Seg_p3c

Ip7

Seg_p3b

Seg_p3a

Seg3b

Seg3c    Seg3a

VM7

dp

y

ER7c

EXR7a

ER7a

ER7b

EXR7b

# FIG. 22

START

INPUT DISPARITY IMAGE — S31

GENERATE V MAP
FROM DISPARITY IMAGE — S32

0→seg_index — S33

START LOOP BY NUMBER OF
PREDETERMINED SEGMENTS — S34

SELECT TWO PREDETERMINED
y COORDINATES IN DISPARITY IMAGE — S35

SET EXTENDED ROAD SURFACE OF
ESTIMATED ROAD SURFACE
IN (seg_index−1)TH SEGMENT
TO REFERENCE ROAD SURFACE — S36

SELECT TWO dp COORDINATES
RESPECTIVELY CORRESPONDING
TO SELECTED TWO y COORDINATES
IN REFERENCE ROAD SURFACE — S37

SELECT SAMPLE POINTS
IN dp COORDINATES
IN TARGET SEGMENT — S38

ESTIMATE ROAD SURFACE SHAPE
USING SAMPLE POINT GROUP — S39

DECIDE SUCCESS OR FAILURE
OF ESTIMATED ROAD SURFACE — S40

seg_index+1→seg_index — S41

TERMINATE LOOP BY NUMBER
OF PREDETERMINED SEGMENTS — S42

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011128844 A